# EUROPEAN PATENT APPLICATION

(11) **EP 4 794 297 A1**
(43) Date of publication of application: **19.08.2026**
(21) Application number: 26151459.0
(22) Date of filing: 13.01.2026
(51) Int. Cl.: H04L 51/216, H04L 51/42, H04L 51/08

(54) **DISPLAY CONTROL DEVICE, DISPLAY SYSTEM, DISPLAY METHOD, AND NON-TRANSITORY COMPUTER-READABLE STORAGE MEDIUM**

(30) Priority: 18.02.2025 JP 2025024438
(71) Applicant: Sharp Kabushiki Kaisha, Sakai City, Osaka 590-8522 (JP)
(72) Inventor: NAKAGAWA, Katsuya, Osaka, 590-8522 (JP)
(74) Representative: Müller Hoffmann & Partner

(57) **Abstract**

A display control device includes a communicator that communicates with one or more server devices that share and manage a message and a sharing target, and a controller. In a case where one or more sharing targets are displayed on a display screen in a list, when a message is linked to one of the sharing targets, the controller performs control to display an identifying indication on the sharing target.

## Description

### BACKGROUND OF THE INVENTION

### Field of the Invention

The present disclosure relates to a display control device and the like. The present application is based on Japanese Patent Application No. 2025-024438 filed on February 18, 2025, and the contents thereof are included in the present application.

### Description of the Background Art

For example, as in Patent Document 1, an apparatus in which an instant communication application acquires a message, a file is included in the message, and the file is stored in a cloud storage space corresponding to the application is disclosed.

### PRIOR ART DOCUMENT

### PATENT DOCUMENT

Patent Document 1: Japanese Unexamined Patent Application Publication (Translation of PCT Application) No. 2018-524740

### SUMMARY OF THE INVENTION

An object of the present disclosure is to provide, for example, a display control device or the like that allows a user to easily recognize a sharing state when sharing and managing a message of the user and a sharing target.

According to an aspect of the present disclosure, a display control device includes a communicator that communicates with one or more server devices that share and manage a message and a sharing target, and a controller. In a case where one or more sharing targets are displayed on a display screen in a list, when a message is linked to one of the sharing targets, the controller performs control to display an identifying indication on the sharing target.

According to another aspect of the present disclosure, a display system includes one or more server devices that share and manage a message and a sharing target, and a display control device that performs, in a case where one or more sharing targets are displayed on a display screen in a list, when a message is linked to one of the sharing targets, control to display an identifying indication on the sharing target.

According to a further aspect of the present disclosure, a display method includes communicating with one or more server devices that share and manage a message and a sharing target, and performing, in a case where one or more sharing targets are displayed on a display screen in a list, when a message is linked to one of the sharing targets, control to display an identifying indication on the sharing target.

According to a still further aspect of the present disclosure, a non-transitory computer-readable storage medium stores a program that causes a computer to realize a communication function of communicating with one or more server devices that share and manage a message and a sharing target, and a control function of performing, in a case where one or more sharing targets are displayed on a display screen in a list, when a message is linked to one of the sharing targets, control to display an identifying indication on the sharing target.

According to the present disclosure, for example, a display control device or the like in which, when a message of a user and a sharing target are managed in a sharing manner, a sharing state is easily recognized by the user may be provided.

### BRIEF DESCRIPTION OF THE DRAWINGS

FIG. 1 is a diagram schematically illustrating a system according to a first embodiment.
FIG. 2 is a diagram illustrating a hardware configuration of the system according to the first embodiment.
FIG. 3 is a diagram illustrating a hardware configuration of the system according to the first embodiment.
FIG. 4 is a diagram illustrating a software configuration of the system according to the first embodiment.
FIG. 5A is a diagram illustrating an example of user information according to the first embodiment.
FIG. 5B is a diagram illustrating an example of theme information according to the first embodiment.
FIG. 5C is a diagram illustrating an example of message attribute information according to the first embodiment.
FIG. 6A is a diagram illustrating an example of a message according to the first embodiment.
FIG. 6B is a diagram illustrating an example of file link information according to the first embodiment.
FIG. 6C is a diagram illustrating an example of message link information according to the first embodiment.
FIG. 7 is a flowchart of a main process according to the first embodiment.
FIG. 8 is a flowchart of a list display process according to the first embodiment.
FIG. 9 is a flowchart of a message display process according to the first embodiment.
FIG. 10 is a flowchart of a file display process according to the first embodiment.
FIG. 11 is a diagram illustrating an operation example according to the first embodiment.
FIG. 12 is a diagram illustrating an operation example according to the first embodiment.
FIG. 13A is a diagram illustrating an operation example according to the first embodiment.
FIG. 13B is a diagram illustrating an operation example according to the first embodiment.
FIG. 14 is a diagram illustrating an operation example according to the first embodiment.
FIG. 15 is a diagram illustrating an operation example according to the first embodiment.
FIG. 16 is a diagram illustrating an operation example according to the first embodiment.
FIG. 17 is a diagram illustrating an operation example according to the first embodiment.
FIG. 18 is a diagram illustrating an operation example according to the first embodiment.
FIG. 19A is a diagram illustrating a software configuration of a first server device in a system according to a second embodiment.
FIG. 19B is a diagram illustrating a software configuration of a second server device in the system according to the second embodiment.
FIG. 20 is a flowchart of a main process according to the second embodiment.
FIG. 21 is a flowchart of a link process according to the second embodiment.
FIG. 22 is a diagram illustrating an operation example according to the second embodiment.
FIG. 23 is a flowchart of a main process according to a third embodiment.
FIG. 24 is a flowchart of a list display process according to the third embodiment.
FIG. 25 is a flowchart of a user data display process according to the third embodiment.
FIG. 26 is a flowchart of a user display process according to the third embodiment.
FIG. 27A is a diagram illustrating an operation example according to the third embodiment.
FIG. 27B is a diagram illustrating an operation example according to the third embodiment.
FIG. 28 is a diagram illustrating an operation example according to the third embodiment.
FIG. 29 is a flowchart of a main process according to a fourth embodiment.
FIG. 30 is a flowchart of a file display process according to the fourth embodiment.
FIG. 31A is a diagram illustrating an operation example according to the fourth embodiment.
FIG. 31B is a diagram illustrating an operation example according to the fourth embodiment.
FIG. 32 is a diagram illustrating an operation example according to the fourth embodiment.
FIG. 33 is a diagram illustrating an operation example according to a fifth embodiment.

### DESCRIPTION OF THE PREFERRED EMBODIMENTS

For example, a system is known in which communication is performed by attaching data itself, such as a file, or a reference destination on the Internet, such as a URL, to a message, such as an electronic mail or a chat tool. In such a system, a recipient (user) temporarily saves the attached data on a desktop or the like, resulting in the burden of managing the data and difficulty in finding dispersed data. That is, data is randomly duplicated, and for example, the same data or different versions of data are scattered in various locations, which makes it difficult to check the data.

Furthermore, when utilizing the data, the user often collects the data into a work-specific folder on a PC before performing operations on the data. In this case, since the original message and the data are separated, it sometimes becomes unclear, for a file stored in a folder on the PC, from whom the file was obtained and through what process it was provided. This requires a time-consuming operation of searching for an email in which the same file was attached in an email system, or a message in which the same file was attached in a message system, and checking the circumstances under which the file was obtained. For example, although a chat tool can display a list of files included in the chat tool, it has a problem in that it cannot associate each message with a corresponding file, or further, with a specific portion within the file.

On the other hand, in a cloud file system, a file-sharing function is implemented, and the user can enter a message by designating a recipient in a form of a comment. However, there is also a problem that it is necessary to open the file in order to see the comment, a new transmission destination cannot be designated, and the comment cannot be used as a message.

A display control device that solves such a problem will be described below in the following embodiments with reference to the drawings. Note that the following embodiments are merely examples of the disclosure described in the claims, and the technical scope of the present disclosure is not limited to the description of the following embodiments.

### 1. First Embodiment

### 1.1 Outline of System

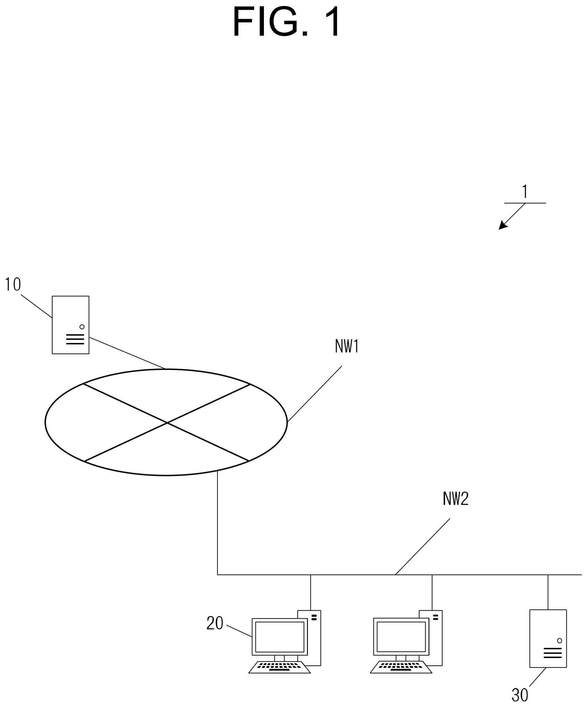

FIG. 1 is a diagram illustrating an outline of a system 1. The system 1 includes a first server device 10 connected to a network (NW1 and NW2). The first server device 10 includes, for example, one or more terminal devices 20 as display control devices connected to the network (NW1 and NW2). The system 1 may further include a second server device 30 as necessary. For example, the first server device 10 can transmit and receive data to and from the terminal device 20 and the second server device 30.

For example, the first server device 10 accepts login of a user who uses the system 1 from the terminal device 20, and manages user data. Here, the user data refers to a sharing target including, for example, information associated with the user, a message posted by the user, and an image and text uploaded by the user. Here, the sharing target refers to sharing target data including one or more folders, one or more files, a page in a file, and a component in a file as data. The first server device 10 may operate as, for example, a cloud server and manage the user data.

For example, in response to a request from the terminal device 20, the first server device 10 can transmit the managed user data and information for displaying the user data to the terminal device 20. The information for displaying the user data is, for example, information for displaying a user interface, and may be information in a markup language, such as HTML. Note that the first server device 10 can store and manage the user data in, for example, a storage section.

For example, the terminal device 20 can input (transmit) a message, as the user data, to the first server device 10 via the network (NW1 and NW2). Furthermore, the terminal device 20 can input a sharing target as the user data and designate an input sharing target. For example, the terminal device 20 can input (transmit) the user data to the first server device 10 by posting a message or uploading a file (sharing target) including an image, text, or the like via a user interface.

Similarly, the terminal device 20 can display or download user data stored in the first server device 10 via the user interface. In this way, the terminal device 20 can transmit and receive a message or a file to and from another terminal device 20 via the first server device 10, and can perform communication using a message or sharing of a file (sharing target). Although the sharing target includes objects other than a file, in this embodiment, an example in which the sharing target is a file will be described below.

Note that, in this embodiment, an HTML supplied from the first server device 10 (cloud server) is interpreted and executed by, for example, a web browser or the like in the terminal device 20. The terminal device 20 may display a user interface by using the web browser or may display a user interface via a program, such as a separate dedicated application. Furthermore, the terminal device 20 may be an information processing apparatus, such as a smartphone or a tablet.

Moreover, the system 1 may include the second server device 30 as necessary. The second server device 30 may be, for example, an on-premise server that operates on a local network (NW2). In this case, the second server device 30 can execute part of the processing of the first server device 10, thereby enabling, for example, cooperation between the on-premises server and the cloud server. For example, the second server device 30 can manage the user data, and the first server device 10 can execute the other processes. Alternatively, the second server device 30, which is the on-premise server, may perform processing on data related to an in-company group, and the first server device 10, which is the cloud server, may perform processing on data related to a group including members outside the company.

### 1.2 Hardware Configuration

### 1.2.1 Common Configuration

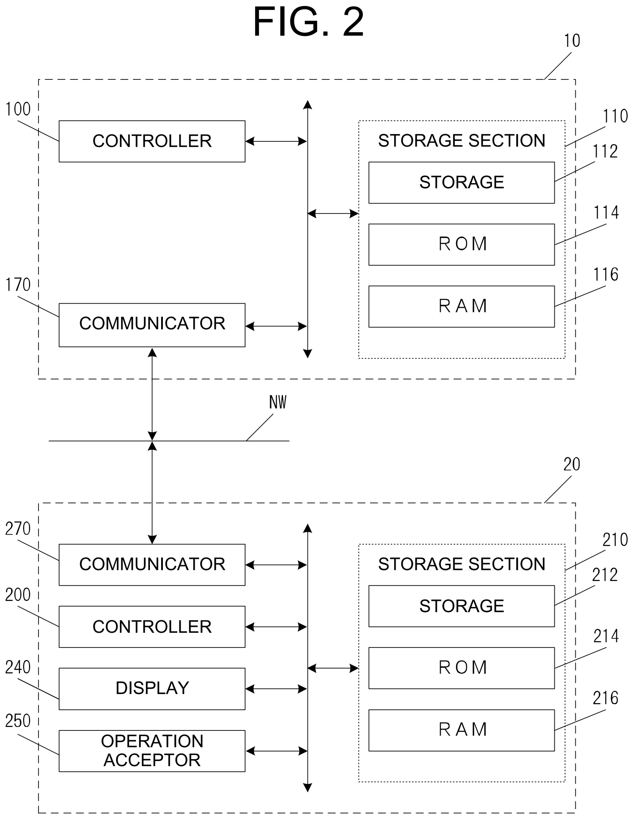

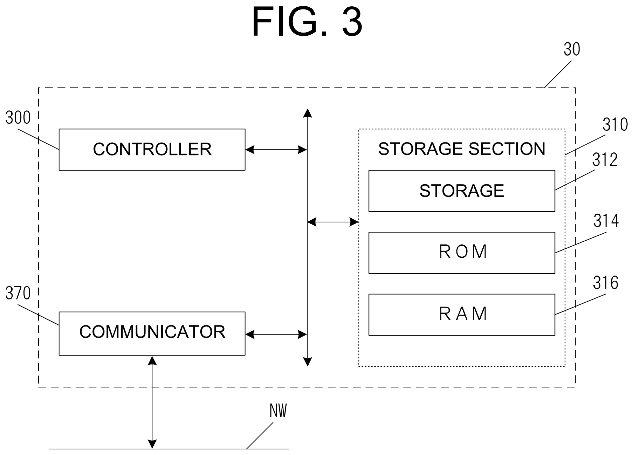

FIGS. 2 and 3 are diagrams illustrating hardware configurations of the individual devices according to this embodiment. Each of the first server device 10, the terminal device 20, and the second server device 30 includes at least a controller, a storage section, and a communicator. In addition, each of the devices has general functions as necessary. Here, among the devices, the controller, the storage section, and the communicator will be described below.

The controllers (for example, a controller 100, a controller 200, and a controller 300) are functional sections for controlling the respective devices as a whole. Each of the controllers implements various functions by reading and executing various programs stored in the storage section. Each of the controllers may be realized by, for example, one or more controllers/computing devices (e.g., a Central Processing Unit (CPU) or a System on a Chip (SoC)). Each of the controllers may include one or more control circuits.

The storage sections (for example, a storage section 110, a storage section 210, and a storage section 310) are functional sections that store various programs and various types of data required for operations of the respective devices. Each of the storage sections includes, for example, a storage, a read only memory (ROM), a random access memory (RAM), and the like.

The storages (for example, a storage 112, a storage 212, and a storage 312) are non-volatile storage devices capable of storing programs and data. For example, each of the storages may be configured by a storage device, such as a Hard Disk Drive (HDD) or a Solid State Drive (SSD). Furthermore, each of the storages may be configured by a Universal Serial Bus (USB) memory which is connectable to the outside. Furthermore, each of the storages may be, for example, a storage region on a cloud.

The ROMs (for example, a ROM 114, a ROM 214, and a ROM 314) are non-volatile memories capable of retaining programs and data even when power is turned off. Each of the ROMs may store, for example, firmware of each device, an initial application, and the like.

The RAMs (for example, a RAM 116, a RAM 216, and a RAM 316) are main memories mainly used when the controllers of the respective devices execute processing. Each of the RAMs is a rewritable memory that temporarily stores programs read from the ROMs of the corresponding one of the devices and data including results of execution.

The communicators (for example, a communicator 170, a communicator 270, and a communicator 370) are communication interfaces that communicate with other devices. For example, each of the communicators may be a network interface that can be connected to a wireless local area network (LAN) or a network interface that can be connected to an Ethernet (registered trademark) in a wired manner. The communicators may be, for example, communication devices connectable to a mobile communication network, such as Long Term Evolution (LTE)/4G/5G/6G.

### 1.2.2 Terminal Device

A hardware configuration of the terminal device 20 will now be described with reference to FIG. 2.

A display 240 is a display device capable of displaying various pieces of information and various screens including execution screens. The display 240 may be, for example, a display device, such as a liquid crystal display (LCD), an organic electroluminescence (EL) display, or an electrophoretic display. Furthermore, the display 240 includes an interface to which a display device is connectable. For example, the display 240 may be configured by an external display device connected via a high-definition multimedia interface (HDMI) (registered trademark), a digital visual interface (DVI), or a DisplayPort.

An operation acceptor 250 is an operation device capable of accepting an operation input performed by a user or an administrator. For example, a software key displayed on a touch panel integrated with the display 240 or a hardware key, such as an operation button, may be used. The operation acceptor 250 may be an operation device, such as a keyboard or a mouse. Moreover, the operation acceptor 250 may include an interface (e.g., USB) to which an operation device is connectable. For example, the different devices may be connected to different operation devices (a keyboard, a mouse, or the like) via an interface.

### 1.3 Software Configuration

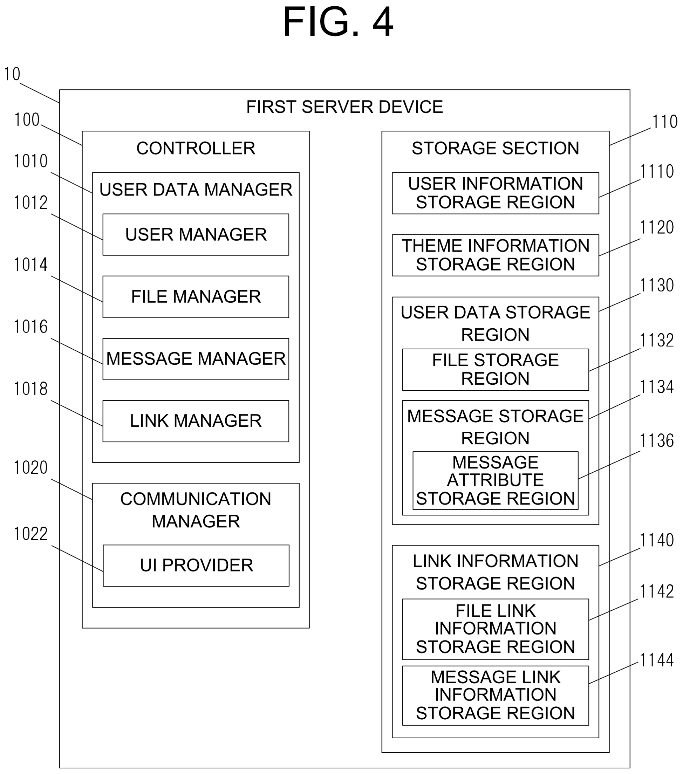

Configurations of main software in the individual devices included in the system 1 will be described with reference to FIG. 4. FIG. 4 is a diagram illustrating a software configuration of the first server device 10. Note that the software configuration illustrated in FIG. 4 mainly describes a configuration required in this embodiment, and other configurations are omitted.

First, the configuration of the main software of the first server device 10 will be described. For example, the controller 100 can realize a user data manager 1010 (a user manager 1012, a file manager 1014, a message manager 1016, and a link manager 1018) and a communication manager 1020 (a UI provider 1022) by reading and executing programs stored in the storage section 110 (the storage 112 or the ROM 114).

The user data manager 1010 executes control required for managing user data of the system 1. The user data manager 1010 can provide a service of structuring and managing a plurality of pieces of data together with the communication manager 1020 to be described later. Note that the user data manager 1010 executes various functions of the user manager 1012, the file manager 1014, the message manager 1016, and the link manager 1018.

Furthermore, the user data manager 1010 can manage user data in association with a group as necessary. Here, the group may include, for example, a common topic (theme), a sub-theme obtained by further subdividing the theme, and a work site (workspace) provided for each more specific work in the theme or the sub-theme. The user data manager 1010 can manage user-associated information, messages, and files of the user data in association with groups. The user data manager 1010 can hierarchically manage the groups.

By managing user data in association with a group, the user data manager 1010 can display, for example, a message or a file associated with the group only to members. Here, the member means a user associated with a group. The user data manager 1010 can also transmit and receive the user data for each group, for example. Note that the user data manager 1010 can execute processes, such as generation of a group, change of a display name, and registration of a member in a group.

The user manager 1012 stores and manages information on a user including information, such as identification information of the user, in a user data storage region 1130. Here, the user identification information is information for identifying each user, and may be, for example, non-overlapping information, such as a user name or a user ID. The management of the information on the user includes, for example, a registration of the user, a setting of a user name, and a setting of affiliation of the user.

The file manager 1014 stores a file input from the terminal device 20 in a file storage region 1132. Here, for example, when the acquired file includes information on a group, the file manager 1014 may store the file in association with the group. The file manager 1014 may manage a file in a folder associated with a group, for example. Note that the file manager 1014 can manage, for example, version information for each file. The version information is a file update history or the like.

The message manager 1016 stores a message input from the terminal device 20 in a message storage region 1134. The message manager 1016 can store and manage a message attribute in a message attribute storage region 1136 together with the message. The message attribute is, for example, information on an attribute related to a message, such as a transmission source or a destination of the message, and a read/unread status of the message. Furthermore, for example, when the acquired message includes information on a group, the message manager 1016 may store the message in the message attribute in association with the group.

The link manager 1018 stores and manages information on the association between a message and a file as link information in a link information storage region 1140. Here, the link information indicates a state of a link between a message and a file. The link manager 1018 organizes user data into a link structure, such as a node and an edge, and manages each node so as to include at least user data and link information.

For example, when version information is stored in a file, the link manager 1018 can manage the file by linking the file to the version information at a time of linking. Although a message and one or more files are linked as the link information, for example, one or more folders, themes, pages in the files, and components in the files may be included and linked as sharing targets other than the files.

The communication manager 1020 performs management for communication between a plurality of terminal devices 20, such as communication between a terminal device 20 and another terminal device 20. Here, the communication includes various processes, such as posting of a message, uploading of a file, and sharing of user data, for example. The communication manager 1020 can transmit and receive user data transmitted and received from the user data manager 1010 to and from the terminal device 20 via, for example, a user interface that can be displayed by the terminal device 20.

The communication manager 1020 includes the UI provider 1022. The UI provider 1022 is a user interface (UI) for displaying user data and inputting the user data, and provides, for example, a display screen displayed on the display 240 of the terminal device 20.

The UI provider 1022 can provide, for example, an operation screen on which a user, a message, and a file are displayed and an operation of inputting a message and a file, such as posting of a message and uploading of a file, can be performed, a notification screen on which a new message is notified, and the like. The UI provider 1022 can further provide, for example, a display screen for inputting a state of a link between a message and a file on the operation screen or the like and associating the message with the file.

Note that, in the display screen provided by the UI provider 1022, a state of a link may not be input simultaneously with a message and a file. For example, the UI provider 1022 can provide a display screen for inputting a state of a link of an already posted message or an uploaded file and associating the message with the file.

For example, the UI provider 1022 may provide a display screen on which a list of messages and files associated with the identification information of the user is displayed, or when one of the messages and the files is selected from the list display, may provide a display screen on which the selected one of the messages and the files is displayed. Alternatively, the UI provider 1022 may display a message on a display screen that displays a timeline in chronological order, for example. Furthermore, the UI provider 1022 may provide, for example, a display screen for displaying a user name and a user icon as a method for displaying a user. Here, the user icon is an icon identified by, for example, a color, a pattern, an image, or the like for identifying a user.

Note that the term "icon" as used herein means various types of data and processing functions displayed on the display screen in a form of, for example, a picture, a pictogram, a sign, or a character. For example, when the user selects an icon, the controller 100 can execute a process set for the icon.

Note that the UI provider 1022 is not required to display all messages and all files. For example, in a case of a message, a display screen in which a portion of the message is separated and displayed by a method of switching the display screen or a scroll operation of the display screen may be provided. Similarly, in a case of a file, for example, the UI provider 1022 may provide a display screen on which a portion of the file is separated and displayed by a folder or the like.

When user interfaces are displayed separately for each group, the UI provider 1022 may provide a display screen on which only messages and files belonging to a target group are displayed. Here, the UI provider 1022 can input a message and a file from a provided operation screen or the like as a message and a file belonging to a group being displayed. Note that the UI provider 1022 can also provide, for example, a display screen for displaying only messages for each group and displaying a common list of files.

Note that, in this embodiment, the UI provider 1022 provides a display screen for displaying a user interface on the display 240 as a web screen using a web browser application. The UI provider 1022 may provide a user interface by using, for example, a dedicated application. As described above, the UI provider 1022 provides a display screen on which input and output of user data, such as a message and a file, can be managed via a user interface. In addition, the UI provider 1022 may provide a display screen for displaying a user interface on the display 240 using a general method.

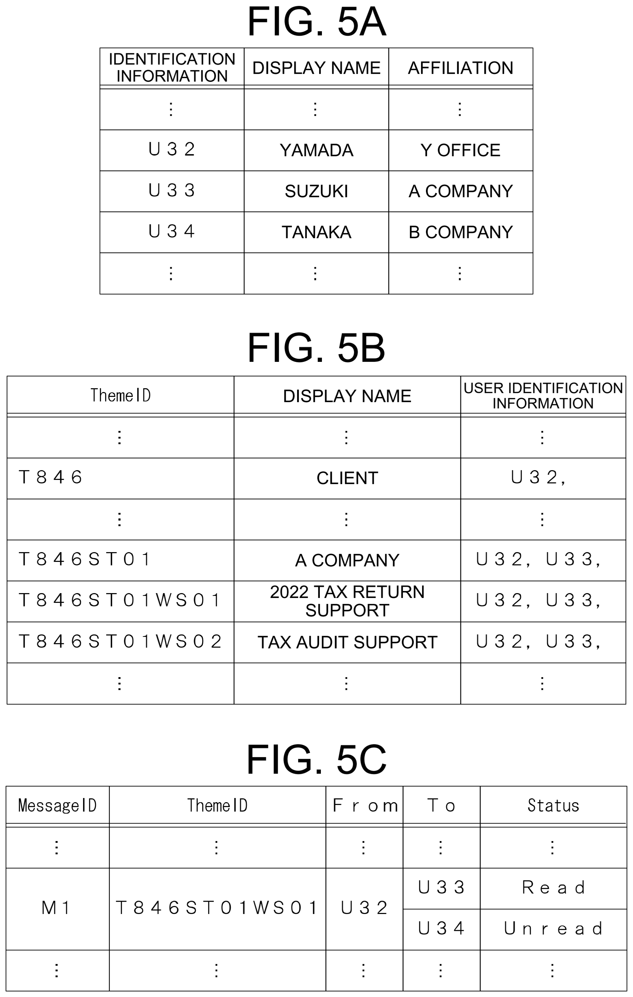

The storage section 110 secures a user information storage region 1110 for storing user information. The user information is, for example, information on a user, such as identification information of a user. Here, an example of the user information stored in the user information storage region 1110 will be described with reference to FIG. 5A. The user information stores identification information (for example, "U32") of a user uniquely assigned, a display name (for example, "Yamada") displayed on an interface or the like, and an affiliation (for example, "Y Office").

The storage section 110 further secures a theme information storage region 1120. Theme information is, for example, information on a group including a theme. Here, an example of the theme information stored in the theme information storage region 1120 will be described with reference to FIG. 5B. The theme information stores ThemeID (for example, "T846ST01WS01") uniquely assigned as identification information of a group, a display name (for example, "2022 Tax Return Support"), and identification information (for example, "U32, U33,") of users of members registered in the theme. Note that, in this embodiment, ThemeID is stored as fixed-length data that enables identification of groups, such as themes, sub-themes, or workspaces. However, for example, each group may alternatively store its own ID for identification.

The storage section 110 further secures a user data storage region 1130 for storing user data. The user data storage region 1130 further secures a file storage region 1132 for storing files and a message storage region 1134 for storing messages.

The file storage region 1132 stores, for example, files such as images, text, and sounds uploaded from the terminal device 20. Here, the file is given unique FileID as file identification information for identifying the file. As an example, FileID such as "F1, F2, F3, ..." may be assigned by using, for instance, a file name or the like. Furthermore, for example, the file storage region 1132 may generate a folder or the like for each group and store files belonging to the group in the folder. Moreover, the file storage region 1132 may generate a folder or the like for managing version information, and may store files having different names for different versions in the folder.

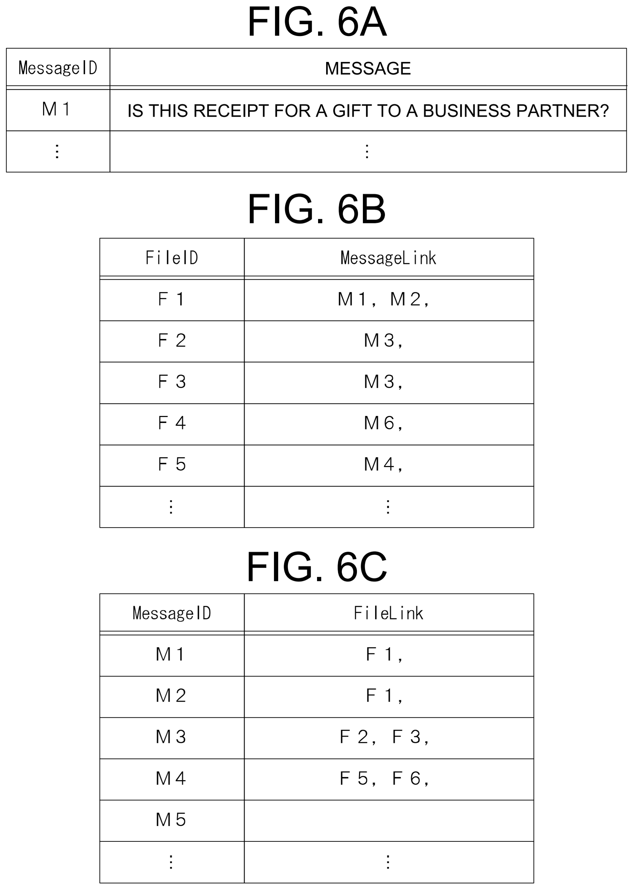

The message storage region 1134 stores, for example, messages posted by the terminal device 20. Here, an example of a message stored in the message storage region 1134 will be described with reference to FIG. 6A. The message includes MessageID (for example, "M1") which is uniquely assigned as identification information of the message, and content of the message (for example, "Is this receipt for a gift to a business partner?")

The message storage region 1134 further secures a message attribute storage region 1136 for storing a message attribute. The message attribute is, for example, information on an attribute related to a message, such as a transmission source or a destination of the message, and a read/unread status of the message. Here, an example of the message attribute stored in the message attribute storage region 1136 will be described with reference to FIG. 5C. The message attribute stores MessageID (for example, "M1") as identification information of the message, ThemeID (for example, "T846ST01WS01") indicating identification information of a group (for example, a theme or a workspace) to which the message belongs, From (for example, "U32") indicating identification information of a user of a transmission source, To (for example, U33) indicating identification information of a user of a transmission destination, and Status (for example, Read) indicating whether the message is unread or read.

Here, Status stores "Unread" indicating a status in which the user has not displayed the message (unread status) and "Read" indicating a status in which the user has displayed the message (read status). In this embodiment, a message and a message attribute are stored in different tables, but for example, a message may be stored as a message file, a reference destination of the message file may be stored in the message attribute, and the message and the message attribute may be managed in a unified manner in a message attribute table.

The storage section 110 further secures a link information storage region 1140 for storing link information. Furthermore, the link information storage region 1140 stores file link information indicating a link state of a message to a file and message link information indicating a link state of a file to a message as information indicating link states which can be identified from each other.

The link information storage region 1140 secures a file link information storage region 1142 for storing file link information. Here, an example of the file link information stored in the file link information storage region 1142 will be described with reference to FIG. 6B. The file link information stores FileID (for example, "F1") which is information for identifying a file, and MessageLink (for example, "M1, M2,") which is information for identifying a message associated with the file. Note that MessageID to be linked is stored in MessageLink, but for example, a plurality of MessageIDs may be stored, and a blank or Null may be stored when linking is not performed.

The link information storage region 1140 further secures a message link information storage region 1144 for storing message link information. Here, an example of the message link information stored in the message link information storage region 1144 will be described with reference to FIG. 6C. The message link information stores MessageID (for example, "M1") that is information for identifying a message and FileLink (for example, "F1") that is information for identifying a file associated with the message. Note that FileID to be linked is stored in FileLink, but for example, a plurality of FileIDs may be stored, and a blank or Null may be stored when linking is not performed.

### 1.4 Processing Flow

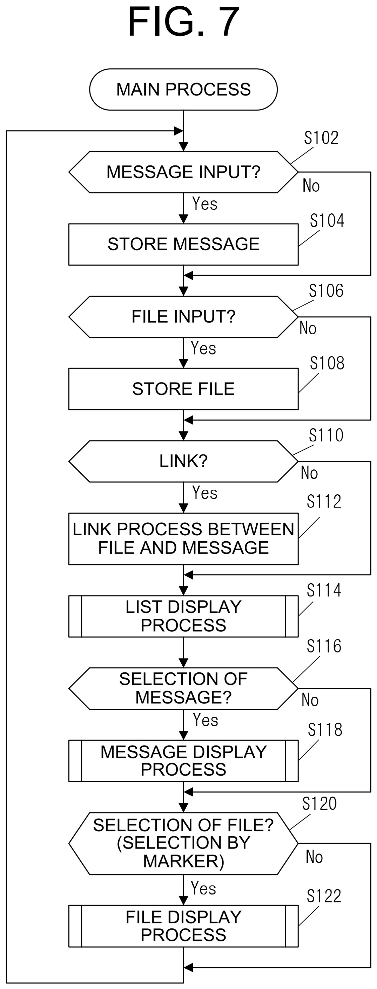

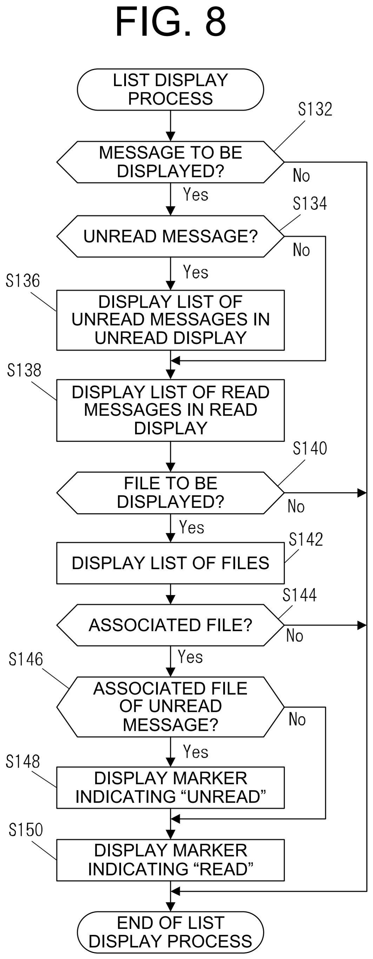

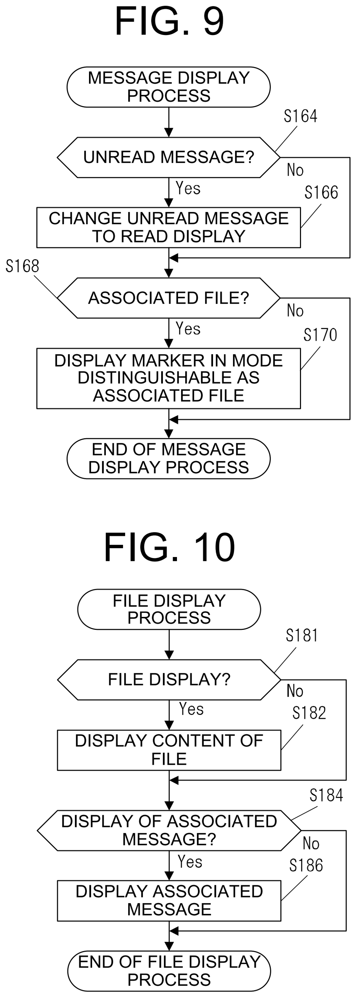

The following describes a flow of processing according to this embodiment. FIG. 7 is a flowchart of a main process of the first server device 10, and FIG. 8 is a flowchart of a list display process in which the first server device 10 displays a list on the terminal device 20. FIG. 9 is a flowchart of a message display process in which the first server device 10 displays a message on the terminal device 20, and FIG. 10 is a flowchart of a file display process in which the first server device 10 displays a file on the terminal device 20.

Here, means of the term "display" by the first server device 10 may include transmission of display data (for example, HTML (HyperText Markup Language)) by the first server device 10 to the terminal device 20 in response to a request from the terminal device 20. The means may further include display of a display screen by the terminal device 20 based on the received display data. Furthermore, the first server device 10 may directly display the display screen by controlling an application of the terminal device 20. In this way, the first server device 10 can control the terminal device 20 to display the display screen.

Although the following processing will be described as being executed by the controller 100 of the first server device 10, the individual components described with reference to FIG. 4 may execute the processes of individual steps.

### 1.4.1 Flow of Main Process

First, the controller 100 determines whether a message has been input from the terminal device 20 (S102). When a message is received from the terminal device 20, the controller 100 determines that the message has been input by the terminal device 20 and stores the message in the message storage region 1134. Furthermore, the controller 100 stores identification information of a user associated with the message in the message attribute storage region 1136 (S102; Yes → S104). When the message and a group (theme) are associated with each other, the controller 100 may also store information associated with the group in the message attribute storage region 1136.

Subsequently, the controller 100 determines whether a file has been input (S106). Note that the controller 100 also determines whether a file has been input when no message has been input from the terminal device 20 (S102; No → S106). When receiving a file from the terminal device 20, the controller 100 determines that the file has been input by the terminal device 20 and stores the file in the file storage region 1132 (S106; Yes → S108). Note that, similarly to the message, when a file and a group (theme) are associated with each other, the controller 100 may store the file in a region corresponding to the group (for example, a folder corresponding to the theme).

Subsequently, the controller 100 determines whether to link (S110). Here, linking refers to associating a message with a file (which may be one or a plurality of files or content of a file, for example, a component, a page, or a word of the content of a file) or a folder (one or a plurality of folders), and the controller 100 generates link information by associating a message with a file or the like. Note that, for convenience of description, a file will be described as an example, but one or a plurality of files, contents of a file, or one or a plurality of folders may be used.

A file linked to a certain message is referred to as an associated file. Here, the associated file can be selected as follows.

(1) The controller 100 sets a file attached to a message or a file posted together with a message (a file transmitted together from the terminal device 20 to the first server device 10) as an associated file. When inputting a message, the user may designate a file that has already been transmitted or content of the file.

Here, for example, when a link button or the like displayed in a message input field is selected, the controller 100 may display a file selection screen and set a file selected in the file selection screen as an associated file. Furthermore, when a message is input in a state where a file (in the case of content of a file, a component, a word, or the like of the content of the file) is selected in advance by the user, the controller 100 may set the selected file as an associated file.

(2) The controller 100 may set a file linked to a message by the user as an associated file. For example, when the user selects a message and then selects a file, the selected file becomes an associated file. In addition, the controller 100 may set a file stored when the user selects a message as an associated file. At this time, the controller 100 may display a preview of content of the file.

Furthermore, a timing at which the controller 100 determines whether to link may be one of the following.
(1) The determination is made each time a message or a file is input. For example, the controller 100 may determine whether to link each time a message is input by the user. Alternatively, the controller 100 may determine whether to link each time a file is input by the user.
(2) The determination is made each time a new file is input. For example, when a new file is transmitted from the user, the controller 100 may determine whether linking is required. In addition, when a message can be retransmitted (for example, quoted, reposted, or the like), the controller 100 may determine whether linking is required when a new message other than a reposted message is transmitted.
(3) The determination is made at each predetermined timing. For example, the controller 100 may determine whether linking is required every time a predetermined time elapses (for example, every 30 seconds, every minute, or the like).

When it is determined that the linking is to be performed, the controller 100 stores a state of the link between the message and the file determined to be associated with the message in the link information storage region 1140 as link information, and performs a link process (S110; Yes → S112). Here, the controller 100 mutually stores identification information of the message and identification information of the file as link information. For example, the controller 100 stores the identification information of the message corresponding to the identification information of the file in the file link information storage region 1142, and stores the identification information of the file corresponding to the identification information of the message in the message link information storage region 1144.

Subsequently, the controller 100 executes a list display process (S114). Note that, even when the linking is not required to be performed (S110; No), the list display process is similarly executed. In the list display process, the first server device 10 displays a list of messages and files on the display 240 of the terminal device 20 in such a manner that the user who has input the message can identify the messages and files. Here, for example, the controller 100 can recognize a user who is performing an operation, and display a list of messages and files that can be displayed by the user. The list display process will be described later.

Next, the controller 100 determines whether a message has been selected (S116). When determining that a message has been selected, the controller 100 executes a message display process (S116; Yes → S118). On the other hand, when the message is not selected, the controller 100 determines whether a file is selected (S120). When determining that a file is selected, the controller 100 executes a file display process (S120; Yes → S122). On the other hand, when a file is not selected, the controller 100 determines again whether a message has been input (S120; No → S102).

Here, in this embodiment, the selection of a file of a sharing target means that an identifying indication (for example, a marker indication to be described later) displayed in addition to the file is selected by the user. That is, when the user selects the identifying indication added to the file, the controller 100 determines that the file is selected.

Note that, in a case where the file is displayed in an identifiable manner, the controller 100 may determine that the file is selected when the file (file name) is directly selected by the user.

The above-described operational flow is an example, and some different processes may be performed. For example, in a case where a message and a file are associated with a group (theme), it may be determined whether the group is selected after step S114. Here, when a group is selected, the controller 100 may execute the list display process of displaying a list of messages and files associated with the group on the display 240 of the terminal device 20.

### 1.4.2 Flow of List Display Process

First, the controller 100 determines whether there is a message to be displayed to a user based on identification information of the user who is performing the operation (S132). For example, the controller 100 may determine, according to message attribute information, that there is a message to be displayed, when there is a message addressed to the user who is performing an operation (the user who is logged in). In addition, in a case where a message and a file are associated with a group (theme), for example, the controller 100 may make a determination based on theme information and the message attribute information, and may determine that there is a message to be displayed in a case where there is a displayable message.

When there is a message to be displayed, the controller 100 determines whether there is an unread message (S132; Yes → S134). The unread message refers to a message that is not displayed by the user. In contrast to the unread message, a read message refers to a message that is displayed by the user. Here, as a method of determining an unread message, for example, the controller 100 may determine that the message is an unread message in a case where identification information of a login user and message attribute information corresponding to the message to be determined indicate the unread state.

When there is an unread message, the controller 100 displays a list of unread messages with an unread indication on the display 240 of the terminal device 20 together with identification information of users associated with the unread messages in a mode in which the users who have input the messages can be identified (S134; Yes → S136). Here, the unread indication indicates that a message is unread. The unread indication may be any indication, such as changing a thickness, a color, or a font of characters of the message, that enables the user to recognize that the message is an unread message.

Next, the controller 100 displays a list of read messages in a read indication together with identification information of users associated with the read messages on the display 240 of the terminal device 20 in a mode in which the users who have input the messages can be identified (S138). The controller 100 also performs the same process when there is no unread message (S134; No → S138). Here, the read indication indicates that a message has already been read, and enables the user to identify that the message has already been read, similarly to the unread indication.

That is, based on the message attribute information, the controller 100 can display a list of messages that can be displayed to the login user in chronological order on the display 240 of the terminal device 20 such that the unread messages are displayed with the unread indication and the read messages are displayed with the read indication. Here, as a method of extracting and displaying a message that can be displayed to a login user, the following methods are considered.

As a first method, a method of displaying a list of messages addressed to the user is considered. The controller 100 may extract, according to the message attribute information, messages for which identification information of destination users matches the identification information of the login user, and display a list of the extracted messages on the display 240.

As a second method, in a case where a message and a file are associated with a group (theme), when a login user is a member of the theme, a list of messages associated with the theme may be displayed. The controller 100 may extract messages belonging to a theme for which identification information of a login user matches identification information of theme information, and display a list of the extracted messages on the display 240.

As a third method, when a specific theme is selected, messages belonging to the theme may be extracted and displayed in a list on the display 240.

Subsequently, the controller 100 determines whether there is a file to be displayed (S140). Here, for example, when a file is stored in the file storage region 1132, the controller 100 may determine that there is a file to be displayed. In addition, in a case where a message and a file are associated with a theme, for example, when the file is stored in a folder or the like associated with theme information in the file storage region 1132, the controller 100 may determine that there is a file to be displayed.

Subsequently, when there is a file to be displayed, the controller 100 displays a list of displayable files (S140; Yes → S142). For example, the controller 100 may display the displayable files on the display 240 of the terminal device 20 according to a user interface for each group, each folder, or the like. Subsequently, the controller 100 determines whether there is an associated file associated with the message (S144). That is, the controller 100 determines whether there is an associated file linked to the message. As a specific example, for example, with reference to message link information corresponding to the message, when identification information of a file is stored in FileLink corresponding to the message, it may be determined that there is an associated file.

When it is determined that there is an associated file, the controller 100 displays the associated file with an identifying indication in the files displayed in the list. For example, the controller 100 performs a marker indication as an additional indication before (or after) the associated file among the files displayed in the list. Here, the marker indication is a single marker indication, and may simply indicate a link to a message, or may be an indication indicating a status. In this embodiment, a description will be given of an example in which the marker indication indicates an unread or read status as the indication indicating a status.

It is determined whether the associated file is associated with an unread message (S144; Yes → S146). The controller 100 determines whether the file is an associated file of an unread message by the same method as step S134. When the associated file is associated with an unread message, the controller 100 displays a marker indication indicating an unread status on the display 240 of the terminal device 20 (S146; Yes → S148).

On the other hand, when the associated file is an associated file of a read message, the controller 100 displays a marker indication indicating a read status on the display 240 of the terminal device 20 (S146; No → S150). Note that the controller 100 may not display the read marker indication but may preferentially display the unread marker indication, for files having the unread marker indication, on the display 240 of the terminal device 20.

Here, the marker indication is an example of an indication that indicates that a file is associated with a message in an identifiable manner. As a display method of the marker indication, for example, an icon of a file may be displayed with an identifying indication (for example, changed in color, blinked, inverted, or added with an additional figure), a character, a sign, a graphic, an icon, or the like may be additionally displayed in the vicinity of the icon of the file, or a file name or the like may be displayed with an identifying indication (for example, changed in color, inverted, or underlined). It is preferable that the unread marker indication and the read marker indication are in different display modes.

In a case where there is no message to be displayed (S132; No), in a case where there is no file to be displayed (S140; No), or in a case where there is no associated file (S144; No), the controller 100 terminates the process.

Note that the above-described operational flow is an example, and some different processes may be performed. In a case where a message and a file are associated with a theme, for example, it may be determined whether the list display process is to be executed for the first time after a login before step S132. In a case where the controller 100 executes the list display process for the first time after login, the controller 100 displays a list of messages by the first method or the second method in step S136, and does not execute step S134 and step S138. Thus, the controller 100 can display a list of newly arrived messages across all themes when the user logs in.

### 1.4.3 Flow of Message Display Process

The message display process executed when a message is selected will be described with reference to FIG. 9. The controller 100 determines whether a selected message is an unread message (S164). Here, a method of determining an unread message may be the same as the method described in step S134.

When it is determined that the message is an unread message, the controller 100 may change the display of the unread message to the display of the read message (S164; Yes → S166). Subsequently, the controller 100 determines whether there is a file linked to the selected message, that is, whether the selected message has an associated file (S168). Note that the determination as to whether there is an associated file may be the same as the method described in step S144.

In a case where it is determined that there is an associated file, the controller 100 displays the associated file with a marker indication in an identifiable manner (S168; Yes → S170). Here, for example, the controller 100 may display only the marker indication in the associated file of the selected message so as to display the file associated with the message in a distinguishable manner.

Furthermore, the controller 100 may separately display the selected message. For example, the controller 100 may independently display the selected message in another window. Moreover, the controller 100 may display only the selected message in an enlarged manner. In addition, the controller 100 may highlight the selected message. Furthermore, when a plurality of messages are selected, the controller 100 may perform the marker indication for all associated files linked to the plurality of selected messages.

### 1.4.4 Flow of File Display Process

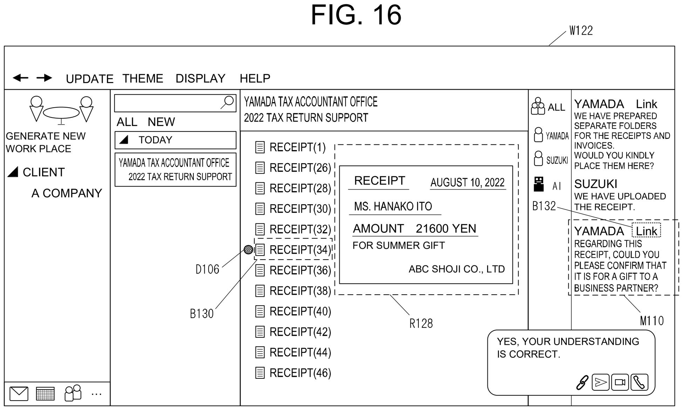

Next, a process performed when a file is selected will be described with reference to FIG. 10. When a file is selected, the controller 100 determines whether to display the file (S181). Here, as a method of determining whether to display a file employed in the controller 100, for example, the following methods are considered.
(1) A marker indication or a file name is selected. When the marker indication is selected, the controller 100 may display content of a target file. Furthermore, the controller 100 may directly select a file name instead of the marker indication. Here, the controller 100 may change whether to select the content of the file by a setting or by an operation. For example, when the user performs a single click on the marker indication, the controller 100 may display the following associated message, and when the user performs a double click on the marker indication, the controller 100 may display the associated message while displaying the content of the file. Furthermore, the associated message may include information associated with the user. In addition, a link for displaying a linked file may be displayed in the associated message.
(2) A link indication in a message is selected. For example, when a link indication (an indication indicating that there is an associated file) included in a message is selected, the controller 100 may display the associated file in response to the link indication. For example, in FIG. 16 which will be described later, when a link indication B132 is selected (for example, selected by a click operation, a touch operation, or the like), the controller 100 displays an associated file or a page or a portion of an associated file based on link information corresponding to the link indication.

When the file is displayed by the selection, the controller 100 may jump to a page or a component in the file and display the page or the component. For example, when the user selects a link indication included in the message, the controller 100 may display a file by referring to a file linked to the link indication and a page number in the file. Furthermore, the controller 100 may display a folder including the file.

The controller 100 may perform a method of displaying ab associated message, for example, by a method opposite to that in step S144. For example, the controller 100 may distinguishably display a message in which identification information of the message corresponding to identification information of the file is stored. Here, for example, the controller 100 may display a list of associated messages in a mode different from the other messages, such as displaying the associated messages in the same color as a display color of the marker indication or highlighting the associated messages. Alternatively, the controller 100 may extract only the associated messages and display the associated messages in chronological order. On the other hand, when it is determined that there is no associated message of the file, the process is terminated (S184; No).

Note that the above-described operational flow is an example, and some different processes may be performed. In a case where the message is linked to a sharing target, such as a page or a component in the file, for example, a process of determining whether the message is linked to the page or the component in the file may be performed between step S182 and step S184. When the controller 100 determines that the message is linked to a page or a component in the file, the controller 100 may display a display screen for displaying a preview of a portion where the message is linked to the page or the component in the file, or may further highlight the portion.

### 1.5 Operation Example

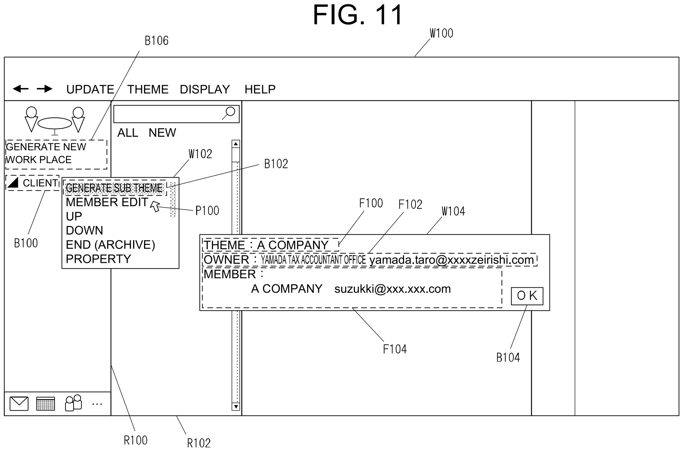

FIGS. 11 to 18 are diagrams illustrating an example of the operation of the terminal device 20 according to this embodiment, and illustrating, for example, exchange between a licensed tax accountant (first user) who is an in-house user and a person in charge (second user) of a company A who has requested the licensed tax accountant to perform tax processing. FIG. 11 is, for example, a diagram illustrating an example of a screen that is displayed on the display 240 of the terminal device 20 of the first user who is the in-house user and that is used by the first user to register the second user as an outside member in a theme and a workplace.

A display screen W100 of FIG. 11 secures a theme display region R100 for displaying a theme and a workplace list display region R102 for displaying a list of workplaces of a selected theme. In the theme display region R100, a "client" button B100 which is registered as a theme and is selectable, a button B106 for generating a new workplace, and a cursor P100 are displayed. Here, the cursor P100 may be, for example, a mouse cursor. The cursor P100 can perform an operation of selecting a first selection button (for example, a left click of the mouse) and an operation of selecting a second selection button (for example, a right click of the mouse). Note that, unless otherwise specified, it is assumed that the first user and the second user have been selected by operating the first selection button.

Here, when the first user selects the "client" button B100 with the second selection button, the controller 100 newly displays a window display W102 on the display screen W100, for example. In the window display W102, a sub-theme generation button B102 is displayed. Here, when the user selects the sub-theme generation button B102, the controller 100 newly displays, for example, a window display W104.

In the window display W104, a theme input form F100, an owner input form F102, a member input form F104, and an OK button B104 are displayed. Here, the first user performs input to each of the theme input form F100, the owner input form F102, and the member input form F104. Subsequently, when the first user selects the OK button B104, the controller 100, for example, adds and displays "A Company" as a sub-theme in the region R100. Furthermore, the controller 100 may register the first user as a member of the sub-theme "A Company", and transmit an e-mail or a message for requesting approval to become a member of the sub-theme "A Company" to the second user. When the second user selects to approve the message, the controller 100 registers the second user as a member of the sub-theme "A Company".

Subsequently, the first user selects the sub-theme "A Company" newly displayed in the region R100 to be in a state of being selected, and then selects the button B106 for generating a new workplace. The controller 100 can add a workplace to the workplace list display region R102 as a workplace of the selected sub-theme "A Company". In this way, it is possible to generate a theme in which files and messages can be exchanged with a client, and by inviting external members (members outside the organization) to the theme, it is possible to perform chatting and file exchange with the external members.

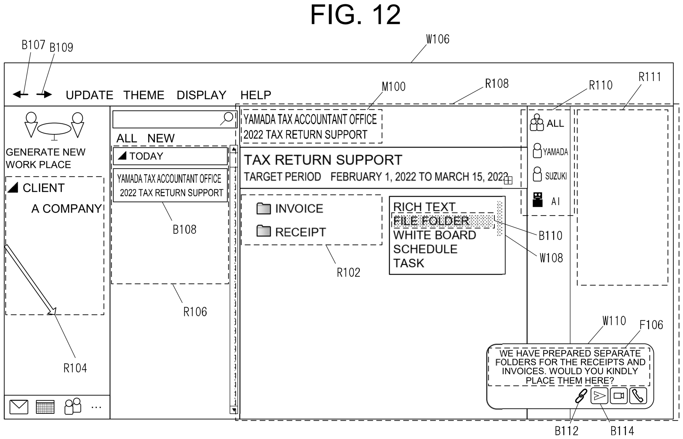

FIG. 12 is a diagram illustrating an example of a display screen W106 displayed on the display 240 of the terminal device 20 of the first user. FIG. 12 is a diagram illustrating an example of a display screen W106 displayed when the first user selects the button B106 of FIG. 11 for generating a new workplace so as to add a workplace to the workplace list display region R102. Note that the second user approves becoming a member of the sub-theme "A Company", and therefore, is a member of the sub-theme "A Company".

In the display screen W106 of FIG. 12, a theme display region R104 for displaying a theme, a workplace list display region R106 for displaying a workplace list of a selected theme, and a workplace display region R108 for displaying a workplace are secured. In the theme display region R104, "Client" is displayed as a theme and "A Company" is displayed as a sub-theme. In the workplace list display region R106, a "Yamada Tax Accountant Office, 2022 Tax Return Support" button B108 is displayed as a selectable workplace. In addition, a back button B107 indicated by an arrow and a forward button B109 indicated by an arrow are further displayed on the display screen W106.

Here, the first user selects the "Yamada Tax Accountant Office, 2022 Tax Return Support" button B108. The controller 100 displays, in the workplace display region R108, a title message M100 "Yamada Tax Accountant Office, 2022 Tax Return Support", a user display region R110, a message display region R111, and a window display W110 for inputting a message. Here, in the user display region R110, icons of "All", "Yamada (first user)", "Suzuki (second user)", and "AI" that can identify users who are members of the sub-theme "A Company" are displayed. In the window display W110, a message form F106, a link button B112, and a send button B114 are displayed.

Here, when the first user selects the back button B107, the controller 100 cancels the display of the workplace display region R108 and enters a state in which the sub-theme "A Company" is selected. Then, when the first user selects the forward button B109, the controller 100 displays the content of the workplace display region R108 again.

In this way, the user can switch the screen in various themes and various workplaces by receiving various works and various messages. In such a case, it is required to be able to go back or forward to the last workplace or theme. The buttons may, for example, act like a forward button and a back button of a web browser, thereby improving the user experience.

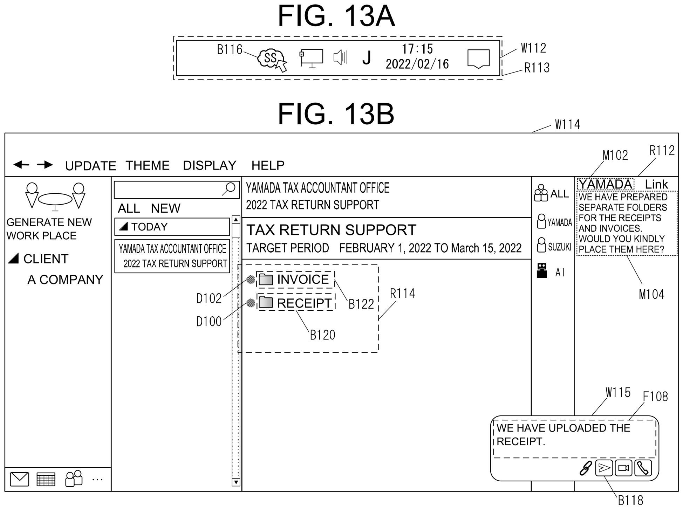

On the other hand, when the first user selects the workplace display region R108 with the second selection button, the controller 100 displays the window display W108 on the display 240. A file folder generation button B110 is displayed in the window display W108. Here, when the first user selects the file folder generation button B110, the controller 100 displays selectable file folders in the region R102 of the workplace display region R108. Subsequently, when the first user inputs a message in the message form F106, selects one of the file folders displayed in the region R102, and selects the link button B112, the controller 100 links the message to the file folder. Here, when the first user selects the send button B114, the controller 100 displays a message input in the message form F106 in the message display region R111. Furthermore, the controller 100 displays a display screen W112 of FIG. 13A for notifying a newly arrived message and a display screen W114 of FIG. 13B displaying the message on the display 240 of the terminal device 20 of the second user that is a destination of the message.

As described above, by selecting the button B106, the controller 100 can generate a workplace for an individual matter, for example, in which a chat or file exchange with a client (second user) can be performed. In the workplace, for example, various contents such as text, folders, tasks, and the like can be included.

Furthermore, for example, the first user presses a link icon (link button B112) after inputting the message, and clicks the file folder displayed in the region R102 as a link target. The controller 100 links and associates the file folder and the message. As a result, the message is associated with the object (file folder), and the message and the file can be easily linked.

FIGS. 13A and 13B are diagrams illustrating examples of a notification region R113 of the display screen W112 and the display screen W114 displayed on the display 240 of the terminal device 20 of the second user. FIG. 13A is a diagram illustrating an example of the notification region R113 included in the display screen W112 displaying the notification button B116 for notifying the second user at the destination of a newly arrived message when the message transmitted in FIG. 12 is received.

On the display screen W112 of FIG. 13A, the notification button B116 for notifying the second user of a newly arrived message is displayed, for example, in a blinking manner. Here, when the second user selects the notification button B116, the controller 100 displays the display screen W114 of FIG. 13B on the display 240.

On the display screen W114 of FIG. 13B, a message display region R112, a file display region R114, and a window display W115 for inputting a message are displayed. In the message display region R112, a message M102 having a display name of the first user "Yamada" and a message M104 "We have prepared separate folders for the receipts and invoices. Would you kindly place them here?" are displayed. Here, Yamada is displayed based on identification information of the first user, and the controller 100 displays the message in the message display region R112 as the message associated with the identification information of the first user.

A message form F108 is displayed in the window display W115. In the file display region R114, a button B120, which is a selectable receipt folder icon, and a marker indication D100, which indicates that the message M104 is linked to a receipt folder, are displayed. In addition, a button B122, which is a selectable invoice folder icon, and a marker indication D102 indicating that the message M104 is linked to an invoice folder, are displayed.

As described above, the user can recognize, according to the marker indication that enables identification of the link, that the button B120, which is the receipt folder icon, and the button B122, which is the invoice folder icon, are files linked to the associated message. In this embodiment, the marker indications D100 and D102 indicating that the message is linked are displayed in the vicinity of the folder icons as an example of display for distinguishably displaying that the files are associated with each other. However, a different display mode may be performed. For example, an identifying indication may be performed such that the button B120 and the button B122 are highlighted, a display color is changed, or a font is changed. In addition, since the files can be received together with the message without the need for processing, such as downloading from a mail attachment, there is no risk of information leakage, and time and effort for encryption/decryption are not required.

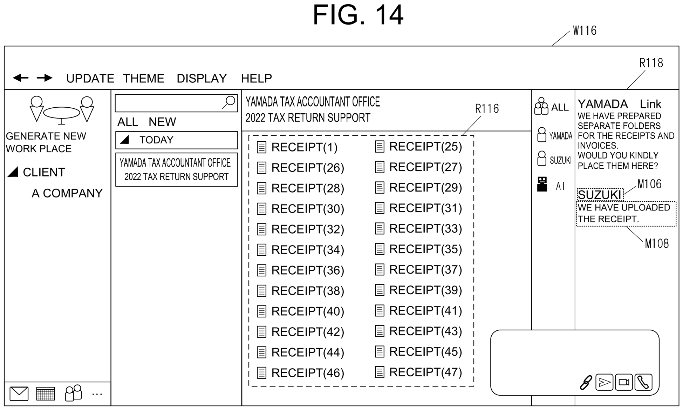

Note that, when the second user selects the button B120 or the button B122, files and folders stored in the respective folders can be displayed. It is assumed here that the second user uploads a file in a folder and enters a message in the message form F108. Then, when the second user selects the send button 118 without linking the file in the folder, the controller 100 displays a display screen W116 of FIG. 14 on the display 240 of the terminal device 20 of the first user of the destination.

In the display screen W116 of FIG. 14, a file display region R116 and a message display region R118 are displayed. Here, in the message display region R118, the messages of the first user and the second user are displayed in a time line in chronological order. In the message display region R118, a display name message M106 of the second user "Suzuki" and a message M108 "We have uploaded the receipt." are newly displayed. Here, the controller 100 displays the messages in the message display region R118 as messages associated with identification information of the second user. Furthermore, since files displayed in the file display region R116 are not linked with the messages, the marker indication is not displayed.

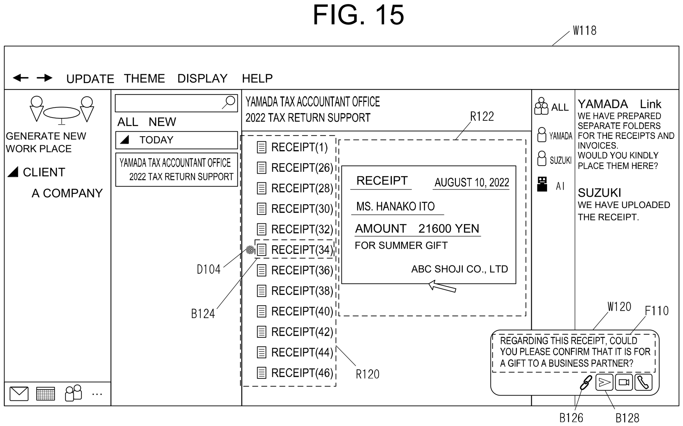

FIG. 15 is a diagram illustrating an example of an operation of the terminal device 20 when the first user links and transmits a message and a file in a display screen W118. In the display screen W118 of FIG. 15, a file display region R120 for displaying files and a preview display region R122 capable of displaying a preview image as content of one of the files are secured, and a window display W120 is further displayed. In the window display W120, a message form F110, a link button B126, and a send button B128 are displayed. In the file display region R120, for example, a "receipt (34)" button B124 is displayed as an uploaded file.

Here, when the first user selects the "receipt (34)" button B124, the controller 100 previews, for example, an image as content of the file of the "receipt (34)" in the preview display region R122. Subsequently, the first user inputs a message "Regarding this receipt, could you please confirm that it is for a gift to a business partner?" in the message form F110, and selects the link button B126. Here, the controller 100 links the message and the file, and displays a marker indication D104 in the file display region R120. Then, when the first user selects the send button B128, the controller 100 sends the message to the second user at the destination. In this way, the first user can easily inquire of the second user at the destination about an arbitrary receipt (file) from among countless receipts (files).

FIG. 16 is a diagram illustrating an example of a display screen W122 displayed on the display 240 of the terminal device 20 of the second user. On the display screen W122 of FIG. 16, a "Receipt (34)" button B130 which is selectable, a preview display region R128, an unread marker indication D106 capable of identifying a link to the button B130, a highlighted unread message M110 "Yamada Regarding this receipt, could you please confirm that it is for a gift to a business partner?" which is transmitted from the first user, and a link button B132 as a link indication are displayed.

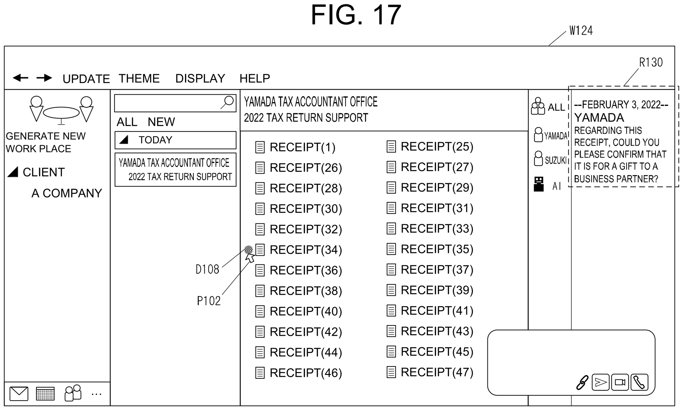

Here, the unread marker indication D106 indicates that the linked message M110 is an unread message, and is, for example, with a frame partially highlighted. Here, when the second user selects the message M110, the controller 100 cancels the highlighted display of the message M110, changes the unread marker indication D106 to, for example, the same marker indication as the marker indication D104 of FIG. 15, and displays the changed marker indication on the display 240 as the read marker indication. Furthermore, when the second user selects the link button B132 which is the link indication, the controller 100 displays, for example, an image of "Receipt (34)" which is the associated file linked to the message in the preview display region R128. On the other hand, when the second user selects the unread marker indication D106, the controller 100 displays a display screen W124 of FIG. 17.

FIG. 17 is a diagram illustrating an example of the display screen W124 displayed on the display 240 of the terminal device 20 of the second user. On the display screen W124 of FIG. 17, a marker indication D108 indicating that the file "Receipt (34)" is linked, a cursor P102, and a message display region R130 are displayed. A message linked to the file "Receipt (34)" is displayed in the message display region R130.

In this way, when the user clicks a marker indication of a file, a message associated with the file is displayed, so that the user can find the associated message using the file as a clue. For example, when the user selects a marker indication and specifies a file, a message associated with the specified file is extracted and displayed on the display 240. Therefore, the terminal device 20 can display the message and the link of the file in a mutually identifiable manner such that the file is displayed with a marker indication from the message and the message is displayed from the file.

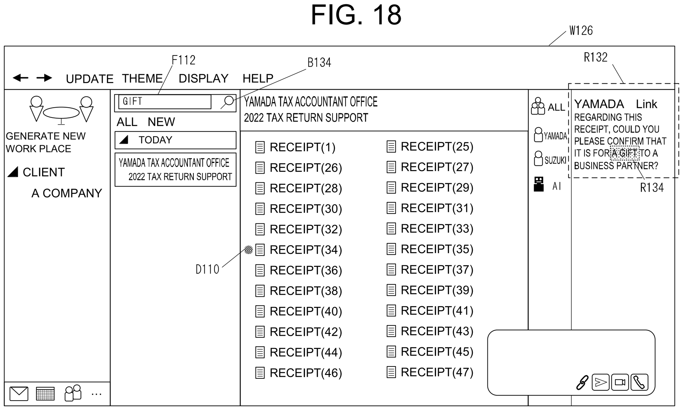

FIG. 18 is a diagram illustrating an example of a display screen W126 displayed on the display 240 of the terminal device 20 of the first user. FIG. 18 is a diagram illustrating an example of an operation of the terminal device 20 when the first user searches for a message and a file using a specific keyword in the display screen W126, for example. In the display screen W126 of FIG. 18, a search form F112, a search button B134, and a message display region R132 are displayed. Here, for example, when the first user inputs "gift" in the search form F112 and selects the search button B134, the controller 100 displays a message including "gift" in the message display region R132 and further displays a marker indication D110 indicating a file linked to the message in the display screen W126. Here, in the message displayed in the message display region R132, a portion corresponding to the keyword "gift" input in the search form F112 is highlighted as a highlighted region R134.

In this way, the user can find a specific file by relying on the memory of the wording (keyword) of the message. The user can systematically identify a file and a message in such a manner that the user inputs a specific keyword to the terminal device 20 to search for the message and further displays a marker indication on the associated linked file. Therefore, the user can easily find the file based on the keyword.

The terminal device 20 displays, for example, a communication cloud storage that integrally manages files and communications in a unit of theme, such as a project or a task, and each theme can provide a space in which members belonging to the theme share files and exchange messages. The messages and the files can be linked to each other, and when the user selects one of the messages, a linked one of the files or components is displayed in a distinguishable manner by a marker indication or the like. When the user selects one of the files, a linked one of the messages is displayed in a distinguishable manner. That is, in the message management service, a message and a file are managed in association with each other, so that easy operability can be provided.

In this way, it is possible to manage flow-type communication data, such as mails and chats, and store-type data, such as files and shared folders, so as to be associated with each other. Thus, it is possible to provide an information sharing space service capable of preventing data from being scattered.

In this embodiment, each of the window displays is displayed as a dialog on the operation screen displayed on the display 240. Here, for example, the controller 100 may display the operation screen on the display 240 as a display screen displayed by switching the operation screen.

In this embodiment, a file linked to (associated with) a message displayed in a list is displayed with a marker indication on the display 240. However, for example, after the user selects a message, only a file associated with the selected message may be displayed with the marker indication on the display 240.

In this embodiment, an unread message is displayed in correspondence with an unread marker indication, and a read message is displayed in correspondence with a read marker indication. However, for example, the controller 100 may display unread/read messages separately by determining whether each message is unread or read without using such correspondence.

### 1.6 Effects and the like

According to this embodiment, it is possible to provide an information sharing space service capable of preventing scattering of data and managing a message of a user and a sharing target in association with each other. As a result, the user can freely move back and forth in both directions from sharing target data to a message and from a message to sharing target data with easy operability, and will not lose sight of the data.

Furthermore, according to this embodiment, messages can be exchanged based on a structure of data management and data, and a system of the data is maintained, so that scattering of the data can be prevented, and the data and the messages can be easily found using the messages and files as keys. Furthermore, the data in the storage and the messages may be associated with each other. A transmitter can transmit a message by designating data, and a receiver can not only display the data but also find a linked message from the data when displaying the message.

### 2. Second Embodiment

A second embodiment will be described below. In the second embodiment, processing is distributed between a cloud server and an on-premise server.

In the second embodiment, the description will be omitted for the components including the same hardware and software configuration as the first embodiment, and the description will focus on the points different from the first embodiment.

### 2.1 Software Configuration

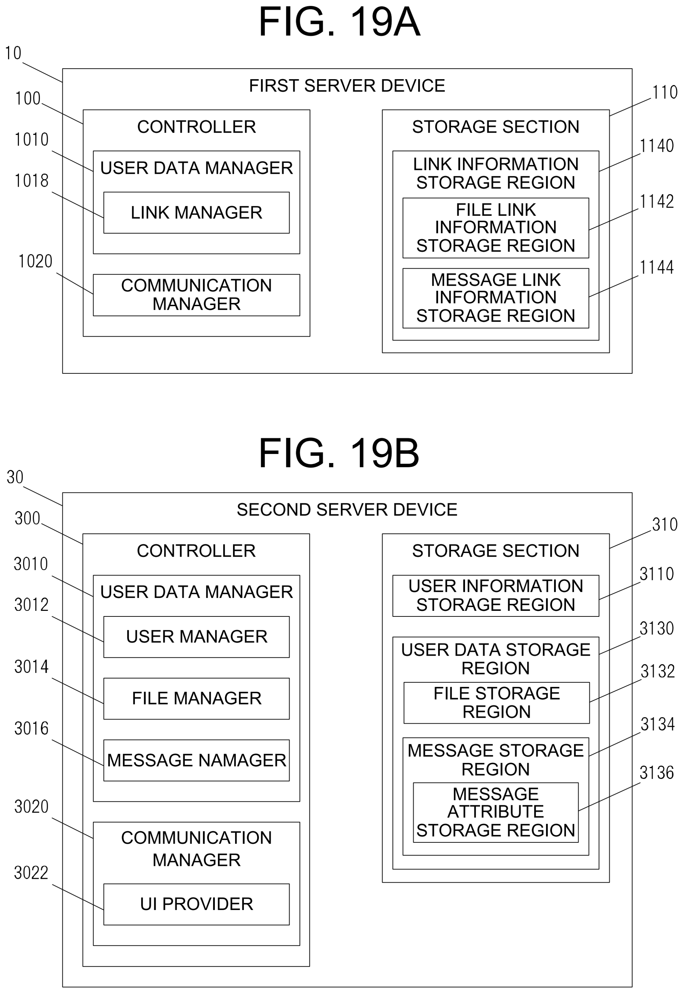

FIG. 19A and FIG. 19B are diagrams illustrating software configurations of the first server device 10 and the second server device 30. Note that the software configurations illustrated in FIGS. 19A and 19B mainly describe configurations required in this embodiment, and other configurations are omitted.

A configuration of main software of the second server device 30 will be described. For example, a controller 300 can realize a user data manager 3010 (a user manager 3012, a file manager 3014, and a message manager 3016) and a communication manager 3020 (a UI provider 3022) by reading and executing a program stored in a storage section 310 (a storage 312 or a ROM314).

The user data manager 3010 (the user manager 3012, the file manager 3014, and the message manager 3016) is the same as the user data manager 1010 (the user manager 1012, the file manager 1014, and the message manager 1016) of the first embodiment, and the processing is distributed. The user data manager 3010 manages user data through the communication manager 3020.

The communication manager 3020 (the UI provider 3022) is the same as the communication manager 1020 (the UI provider 1022) of the first server device 10, and distributes the processing. The communication manager 3020 transmits and receives link information to and from the terminal device 20 in place of the communication manager 1020 of the first server device 10.
In addition, in this embodiment, the communication manager 3020 does not display messages and files divided into groups, but collectively displays a list of messages and files.

A user information storage region 3110 secured in the storage section 310 corresponds to the user information storage region 1110, and a user data storage region 3130 (a file storage region 3132, a message storage region 3134, and a message attribute storage region 3136) corresponds to the user data storage region 1130 (the file storage region 1132, the message storage region 1134, and the message attribute storage region 1136).

In this embodiment, a process related to linking is executed by the first server device 10, and the other processes are executed by the second server device 30, but this is merely an example, and for example, a process related to a user may also be executed by the first server device 10.

### 2.2 Processing Flow

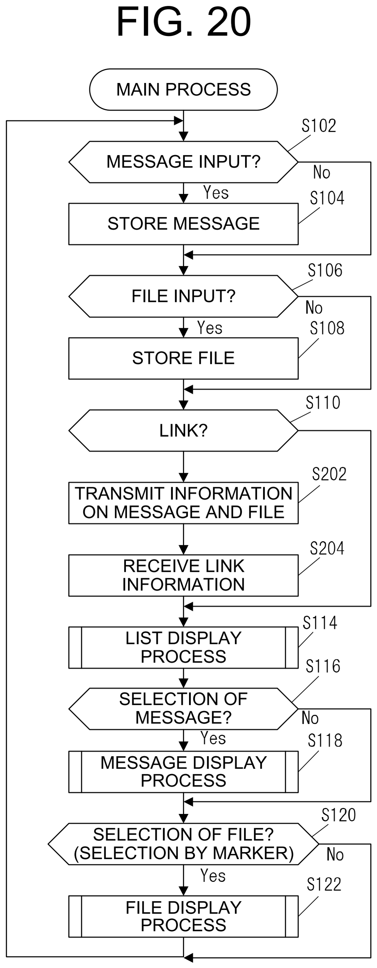

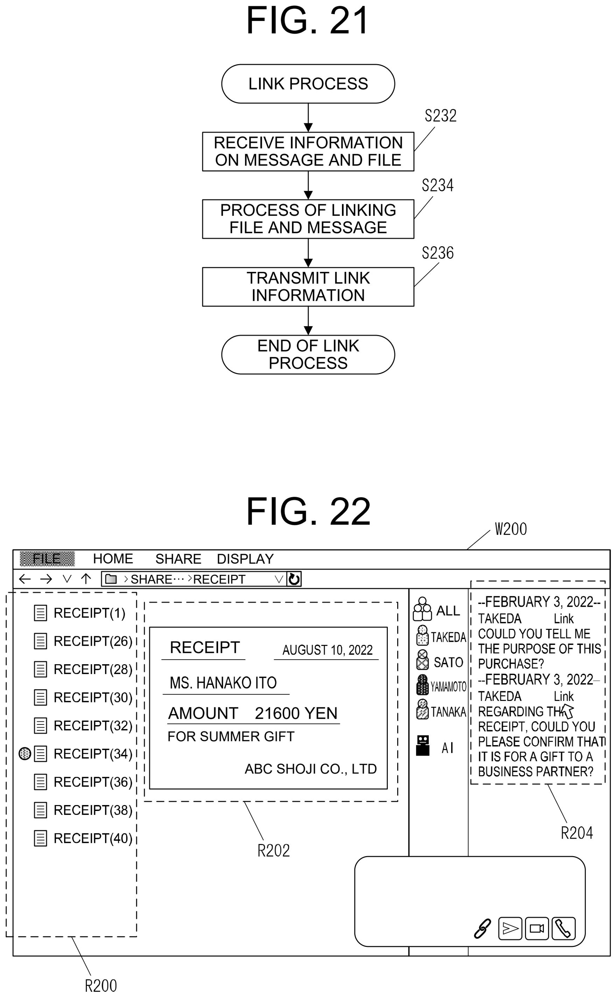

The following describes a flow of processing according to this embodiment. FIG. 20 is a diagram illustrating a main process executed by the second server device 30 instead of the first server device 10, and FIG. 21 is a diagram illustrating a link process in which the first server device 10 manages link information.

### 2.2.1 Flow of Main Process

FIG. 20 replaces FIG. 7 of the first embodiment, and step S202 and step S204 are executed instead of step S112.

First, when determining that a link is to be established, the controller 300 of the second server device 30 transmits information on a message and a file to the first server device 10 (S110; Yes → S202). Here, information on the message and the file is, for example, identification information of the message and identification information of the file. For example, in the case of a message, the controller 100 may transmit MessageID as identification information of the message to the first server device 10, and in the case of a file, the controller 100 may transmit FileID as identification information of the file to the first server device 10. Next, the controller 300 receives link information from the first server device 10 (S204).

### 2.2.2 Flow of Link Process

First, the controller 100 of the first server device 10 receives a message and file information from the second server device 30 (S232). Then, the controller 100 performs a link process on the file and the message in the same manner as step S112 (S234). Subsequently, the controller 100 transmits the link information to the second server device 30 (S236).

### 2.3 Operation Examples

FIG. 22 is a diagram illustrating an example of an operation of the terminal device 20 in a display screen W200. On the display screen W200 of FIG. 20, a file display region R200 for displaying a list of files, a preview display region R202 for displaying an image of a selected file, and a message display region R204 are displayed. In this way, the controller 300 collectively displays a list of messages and files on a display 240 of the terminal device 20. Since the second server device 30 is connected to a local network (NW2), a secure environment can be provided in which user data is unlikely to leak to the outside. Furthermore, since the second server device 30 performs the process of the first server device 10, for example, the system 1 can be used inexpensively in a small-scale use environment.

### 3. Third Embodiment

A third embodiment will be described below. In this embodiment, a message and a file can be identified from a user, and the user can be identified from the file.

In the third embodiment, the description will be omitted for the components including the same hardware and software configuration as the first embodiment, and the description will focus on the points different from the first embodiment.

### 3.1 Flow of Processing

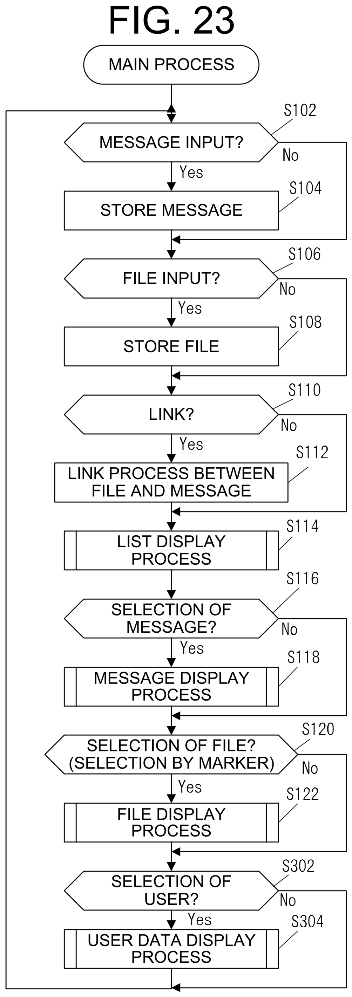

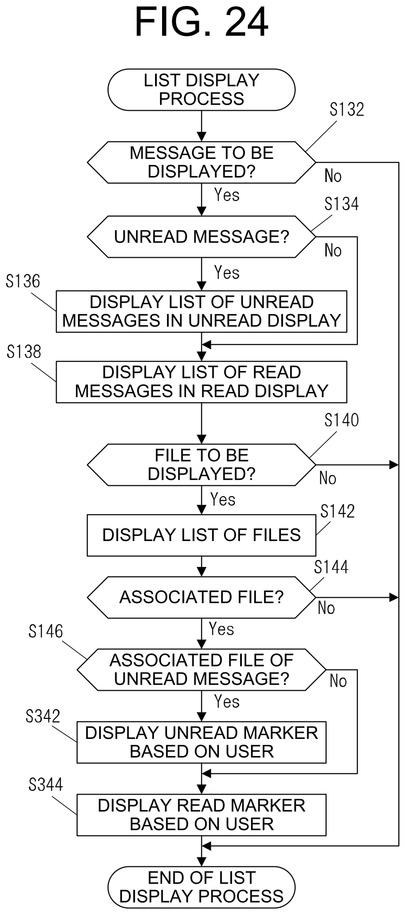

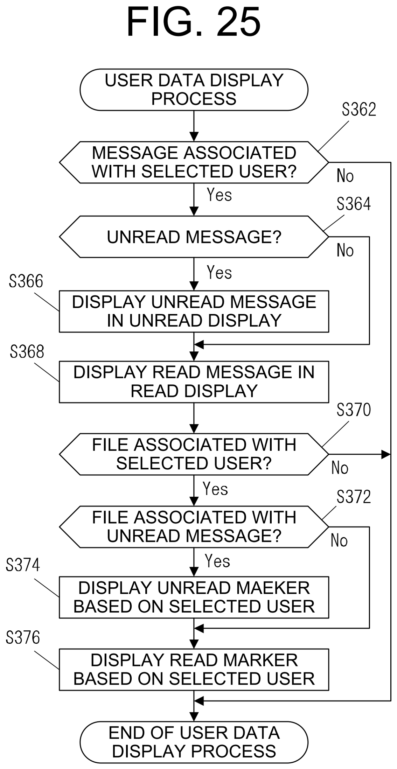

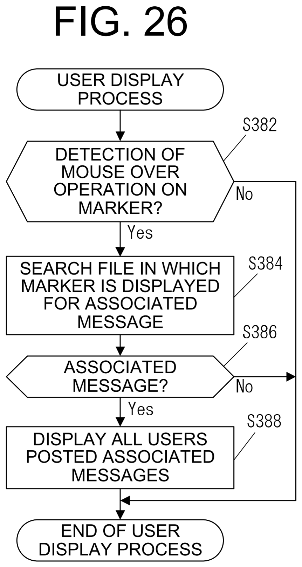

The following describes a flow of processing according to this embodiment. FIG. 23 is a flowchart of a main process executed by the first server device 10, and FIG. 24 is a flowchart of a list display process executed by the first server device 10. FIG. 25 is a flowchart of a user data display process executed by the first server device 10, and FIG. 26 is a flowchart of a user display process executed by the first server device 10.

### 3.1.1 Flow of Main Process

FIG. 23 replaces FIG. 7 of the first embodiment, in which step S302 and step S304 are executed after S122.

First, the controller 100 determines whether a user has been selected (S302). As a method of determining that the user has been selected, for example, it may be determined that the user is selected when a display name of the user or an icon indicating the user is selected. When it is determined that the user has been selected, the controller 100 executes a user-data display process (S302; Yes → S304). In the user data display process, user data is searched for based on identification information of the user and messages and files associated with the user are displayed. The user data display process will be described later. On the other hand, when a user is not selected, the controller 100 determines again whether a message has been input (S302; No → S102).

### 3.1.2 Flow of List Display Process

FIG. 24 replaces FIG. 8 of the first embodiment, in which step S342 is executed instead of step S148 and step S344 is executed instead of step S150. In this embodiment, a user icon indicating a user who has input a message and a marker indication (identifying indication) are displayed in association with each other. For example, the user icon and the marker indication may be displayed in the same type of color to indicate the correspondence relationship. In addition, the user icon and the marker indication may be displayed in the same type of shape (for example, a rectangle, a circle, a triangle, or the like) to indicate the correspondence relationship.

First, when an associated file is associated with an unread message, the controller 100 displays an unread marker indication based on a user who has posted the message displayed in a list (S146; Yes → S342). On the other hand, when the associated file is associated with a read message, the controller 100 displays a read marker indication based on the user who has posted the message in the list (S146; No → S344).

Here, as an example of a method of displaying the marker indication based on the user who has posted the message in the list, first, the controller 100 specifies the message corresponding to identification information of the selected user from, for example, a message attribute. Then, the controller 100 specifies a file from identification information of the message and message file link information. The controller 100 may associate the file with the user by displaying a marker corresponding to the user on the file.

Note that the controller 100 may display a marker indication based on the user who has input the latest message, for example. As an example thereof, for example, the controller 100 specifies, in the file message link information, a message having latest MessageID which is identification information of a message associated with identification information of a file. The controller 100 specifies identification information of the user who has input the message from MessageID of the message and a message attribute. In this way, the controller 100 can mutually identify the user from the file and the file from the user. For example, the controller 100 can display, on the display 240, an unread marker indication or a read marker indication to which a mode of a color of the user icon of the user who has performed the input is applied.

### 3.1.3 Flow of User Data Display Process

First, the controller 100 determines whether there is a message associated with the selected user (S362). As an example of a method of determining whether there is an associated message, for example, the controller 100 may determine that there is an associated message when there is MessageID corresponding to the identification information of the user with reference to the identification information of the selected user and the message attribute. In a case where there is a message related to the selected user, the controller 100 determines whether there is an unread message, similarly to step S134 (S362; Yes → S364).

When there is an unread message, the controller 100 displays the unread message in a list with the unread indication on the display 240 of the terminal device 20 (S364; Yes → S366). Subsequently, the controller 100 displays a list of read messages with the read indication on the display 240 of the terminal device 20 (S368). Note that the controller 100 also performs the same processing when there is an unread message.

Subsequently, the controller 100 determines whether there is a file associated with the selected user (S370). As a method of determining whether there is an associated file, it may be determined that there is an associated file when a file can be specified from the selected user by the same method as the method of displaying the marker indication based on the user described in step S342 and step S344. When there is a file associated with the selected user, the controller 100 determines whether there is a file associated with the unread message in the same manner as in step S134 (S372).

When the associated file is associated with the unread message, the controller 100 displays an unread marker indication based on the selected user (S372; Yes → S374). On the other hand, when the associated file is associated with the read message, the controller 100 displays a read marker indication based on the selected user (S372; No → S376). Note that the method of displaying the marker indication based on the selected user is the same as in step S342 and step S344.

### 3.1.4 Flow of User Display Process

First, the controller 100 determines whether a mouse-over operation on the marker indication is detected (S382). As a method of detecting a mouse-over operation on the marker indication, for example, the mouse-over operation may be acquired by an event listener by JavaScript (Registered trademark), or a variable, a library, or the like capable of acquiring a cursor position (coordinates) available in a program language, such as C language or Python (Registered trademark) may be used. For example, the controller 100 detects the mouse-over operation from a user interface via the UI provider 1022.

When the mouse-over operation on the marker indication is detected, the controller 100 searches for an associated message in the file with the marker indication being displayed, for example, in the same manner as step S184 (S382; Yes → S384). Subsequently, the controller 100 determines whether there is an associated message based on a result of the search (S386). When there is an associated message, the controller 100 displays all users corresponding to the associated message (S386; Yes → S388). In the method for displaying all the users corresponding to the associated message, identification information of the message is compared with a message attribute to specify the identification information of the users, and the users are displayed on the display 240 based on the specified identification information of the users.

3.2 Operation Examples

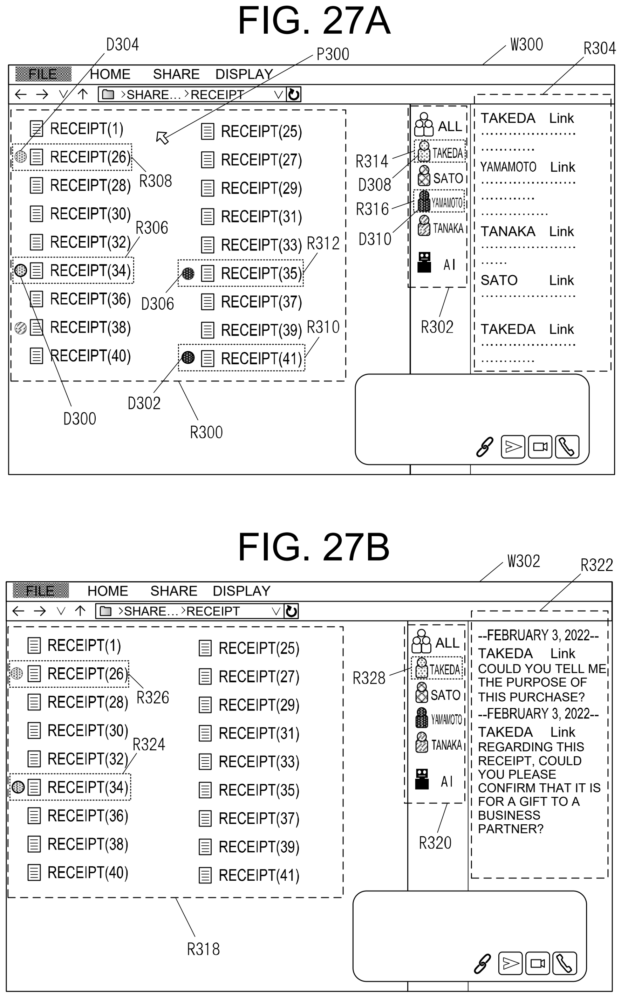

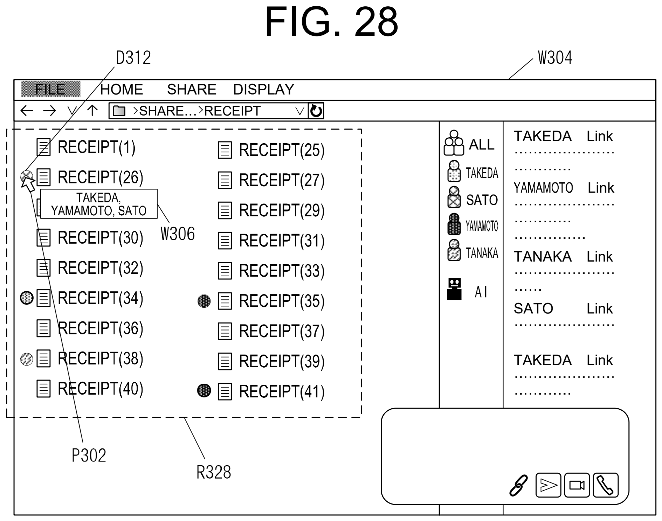

FIGS. 27A, 27B, and 28 are diagrams illustrating an example of an operation of the terminal device 20 according to this embodiment. On a display screen W300 of FIG. 27A, a file display region R300 for displaying files, a user display region R302 for displaying a list of users, a message display region R304 for displaying messages, and a cursor P300 are displayed. The cursor P300 is, for example, an interface, such as a mouse pointer, for operating the terminal device 20.

In the file display region R300, a region R306 in which a file including an unread marker indication D300 is displayed and a region R310 in which a file including an unread marker indication D302 in a form different from that of the unread marker indication D300 is displayed are displayed. Furthermore, in the file display region R300, a region R308 in which a file including a read marker indication D304 is displayed and a region R312 in which a file including a read marker indication D306 in a mode different from that of the read marker indication D304 is displayed are displayed. Each of the marker indications is displayed based on a user who has posted a message displayed in a list in the region R304.

In the user display region R302, a selectable region R314 including a user icon D308 for displaying a user "Takeda" and a selectable region R316 including a user icon D310 for displaying a user "Yamamoto" are displayed. Here, a display mode of the unread marker indication D300 and the read marker indication D304 is based on the user icon D308. On the other hand, a display mode of the unread marker indication D302 and the read marker indication D306 is based on the user icon D310. Accordingly, the controller 100 adjusts a marker indication to match an icon or the like of a user of a transmission source (for example, a color corresponding to an icon color of the user of the transmission source ), and changes the indication according to a read/unread status. (For example, an unread message may be displayed with a red frame in identifying indication.)

Here, when the user selects the selectable region R314, the controller 100 displays a display screen W302 of FIG. 27B. On the other hand, when the user moves, for example, the cursor P300 onto the read marker indication D304, the controller 100 displays a display screen W304 of FIG. 28.

On the display screen W302 of FIG. 27B, a file display region R318 for displaying files, a user display region R320 for displaying a list of users, and a message display region R322 for displaying messages are displayed. In the file display region R318, a region R324 and a region R326 in which files associated with the user "Takeda" are displayed are displayed. In the user display region R320, a selectable region R328 for displaying the user "Takeda" is displayed. In the message display region R322, messages associated with the user "Takeda" are displayed. Thus, by selecting a specific user, a message associated with the user and a file to which the message is linked can be displayed on the display 240.

Thus, when the user selects the identification information of the user, marker indications of the files and messages are narrowed down and displayed. That is, the user can easily find a message or a file by using a specific user as a key. Note that, in this embodiment, for example, a message and a file associated with each other are displayed by selecting a user icon or the like displayed in the user display region R320. However, for example, a user name of an already displayed message may correspond to a selected user.

On the display screen W304 of FIG. 28, a file display region R328 for displaying files and a cursor P302 are displayed. In the file display region R328, a read marker indication D312 and a cursor P302 on the read marker indication D312 are displayed, for example, in a mouse-over state. The file display region R328 further displays a window display W306 for displaying users, for example, "Takeda", "Yamamoto", and "Sato" as a result of the mouse-over of the cursor P302. Here, "Takeda", "Yamamoto", and "Sato" are users who have posted messages that link to a file corresponding to the read marker indication D312. As described above, by moving the cursor (mouse pointer) onto the marker indication indicating the link of the file, the users associated with the file can be easily searched.

### 4. Fourth Embodiment

Hereinafter, a fourth embodiment will be described. In this embodiment, when a plurality of versions are managed, a specific version can be linked to a message, and the linked version can be displayed when the message is displayed.

In the fourth embodiment, the description will be omitted for the components including the same hardware and software configuration as the first embodiment, and the description will focus on the points different from the first embodiment.

### 4.1 Processing Flow

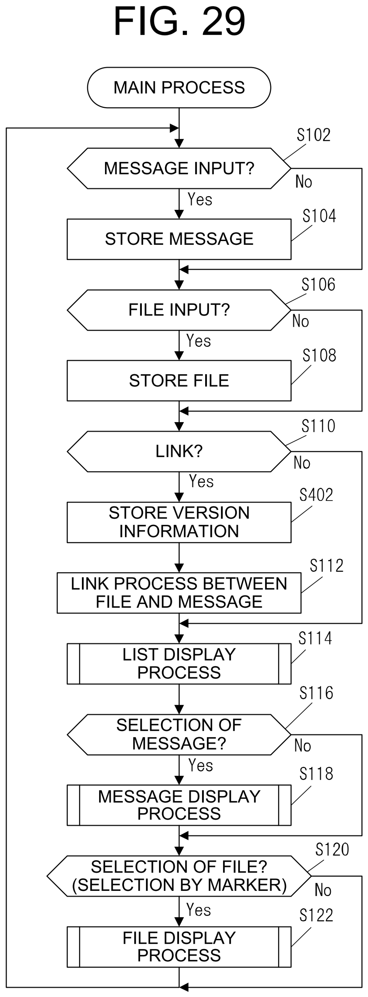

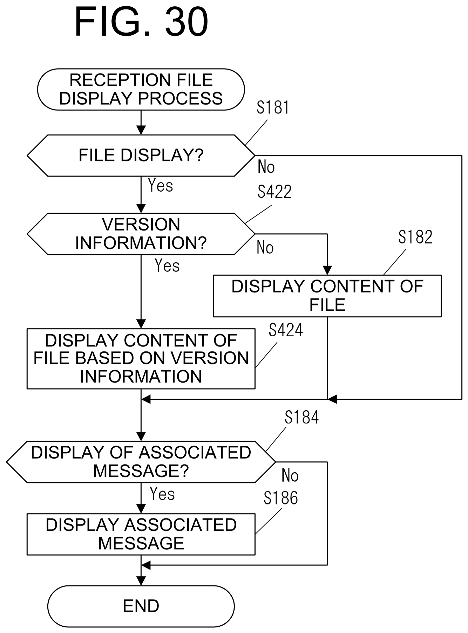

The following describes a flow of processing according to this embodiment. FIG. 29 is a flowchart of a main process executed by the first server device 10, and FIG. 30 is a flowchart of a file display process executed by the first server device 10.

### 4.1.1 Flow of Main Process

FIG. 29 replaces FIG. 7 of the first embodiment, and step S402 is executed between step S110 and step S112.

First, when the controller 100 determines that linking is to be performed, the controller 100 stores version information of a linked file (S110; Yes → S402). For example, the controller 100 may generate and store version information of a linked file every time an operation of linking a message and a file is performed, such as inputting a file together with posting of a message or assigning a message to an uploaded file and associating the message with the file by a user.

### 4.1.2 Flow of File Display Process

First, the controller 100 determines whether there is version information (S422). As a method of determining whether there is version information, it is conceivable to add an attribute, which is version information, to FileID, which is identification information of a file stored in the file storage region 1132. For example, when "F1" of FileID indicates the latest file, and when FileID is "F1V1, F1V2, F1V3, ...", it may be determined that FileID has version information.

When there is version information, the controller 100 displays content of the file based on the version information (S422; Yes → S424). On the other hand, when there is no version information, the controller 100 displays content of the selected file (S422; No → S182).

### 4.2 Operation Example

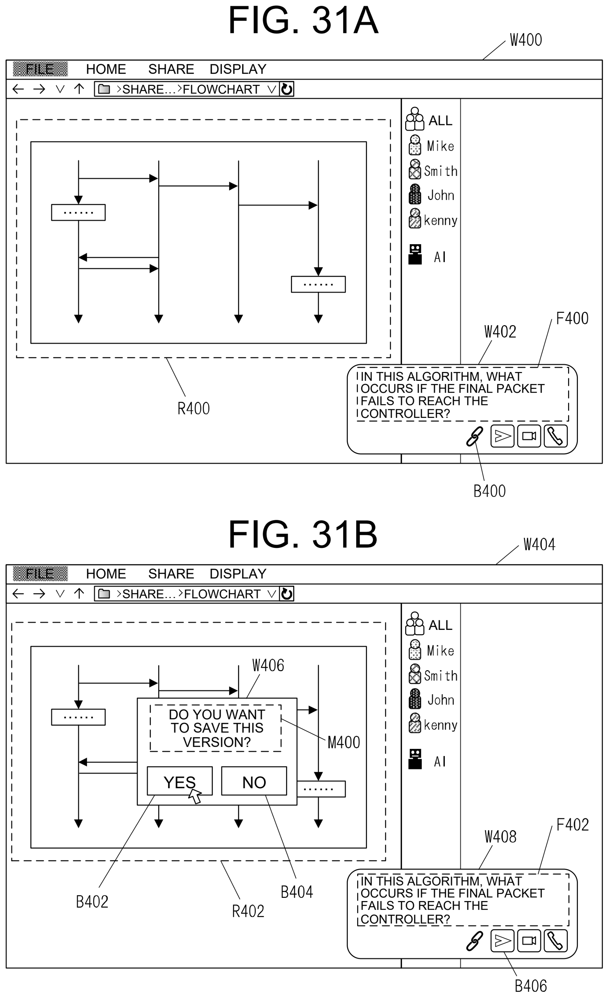

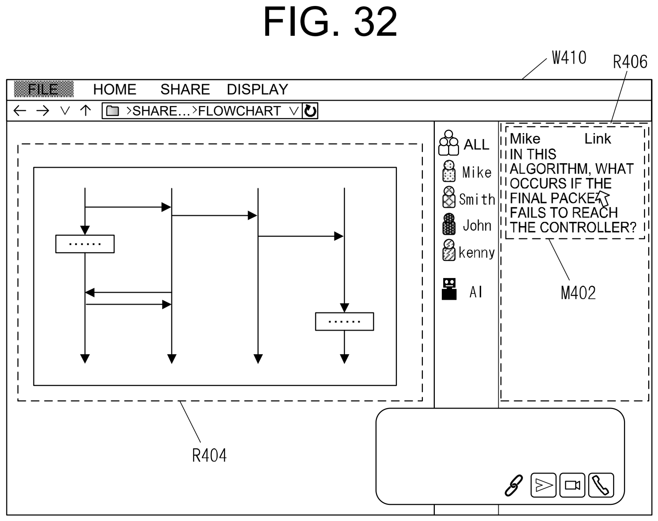

FIGS. 31A, 31B, and 32 are diagrams illustrating an example of an operation of the terminal device 20 according to this embodiment. On a display screen W400 of FIG. 31A, a preview display region R400 for displaying an image of a selected file and a window display W402 for inputting a message are displayed. In the window display W402, a message form F400 and a link button B400 are displayed. Here, when the user inputs a message in the message form F400 and selects the link button B400, the controller 100 displays a display screen W404 of FIG. 31B.

On the display screen W404 of FIG. 31B, a preview display region R402 for displaying an image of a selected file, a window display W406 for confirming a link operation, and a window display W408 for inputting a message are displayed. In the window display W406, a message M400 "Do you want to save this version?", a Yes button B402, and a No button B404 are displayed. In the window display W408, a message form F402 and a send button B406 are displayed.

Here, when the user selects the Yes button B402, the controller 100 generates version information of the file displayed in the preview display region R402, and stores the version information in the storage section 110 in a linked manner. Thereafter, when the user selects the send button B406, the controller 100 displays a display screen W410 of FIG. 32 on the display 240. On the other hand, when the user selects the No button B404, the controller 100, for example, stops the process and displays the display screen W400 of FIG. 31A.

On the display screen W410 of FIG. 32, a preview display region R404 for displaying an image of the selected file and a message display region R406 for displaying a message are displayed. In the message display region R406, a selectable message M402 "Mike, Link, In this algorithm, what occurs if the final packet fails to reach the controller?" is displayed. Here, when the user selects the selectable message M402, the controller 100 displays, for example, an image file of the selected file based on the version information of the file in the preview display region R404.

As described above, the controller 100 manages the version of the file, cuts the revision when the message is linked, and displays the revision at the time of linking when the message is selected. The user can link a message with a file based on version information, and when the message is referenced, the file corresponding to the version information at a time of attachment (linking) can be displayed.

That is, in the terminal device 20, the version information of the file when the user performs the link operation can be generated, and the message and the file can be linked. As a result, since history of the version associated with the message is generated each time, it is possible to easily follow the history of the versions of the message and the file.

In this embodiment, the operation of linking a message and a file is performed by selecting the link button B400. Here, for example, when a message is input in a state where a file or a preview is selected in a workplace, the file or the like to be selected may be associated with (linked to) the message.

### 5. Fifth Embodiment

A fifth embodiment will be described below. In the fifth embodiment, when there is a newly arrived unread message, a group can be displayed with an identifying indication to notify a user of the message.

For example, in the first to fourth embodiments described above, the example has been described in which, when a message is an unread message, a display mode of a marker indication indicating that a file is linked to the message is changed. In this embodiment, instead of changing the display mode of the marker indication, for example, the user is notified by changing a display mode of a group, such as a theme, a sub-theme, and a workplace.

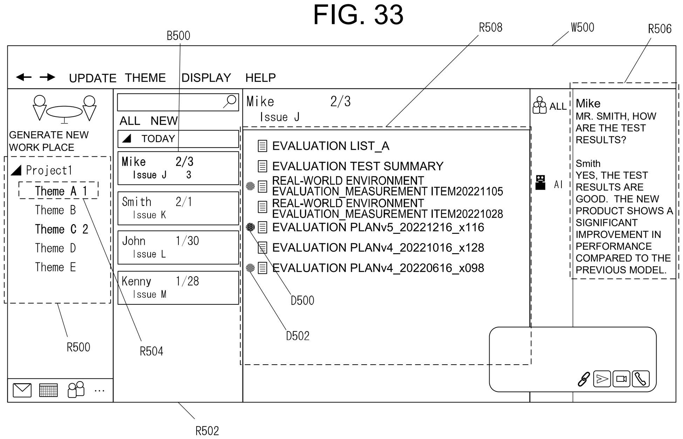

FIG. 33 is a diagram illustrating an example of an operation of the terminal device 20 according to this embodiment. A display screen W500 of FIG. 33 displays a theme display region R500 for displaying a theme, a workplace list display region R502 for displaying a list of workplaces of a selected theme, a message display region R506, and a file display region R508 for displaying a list of files.

In the theme display region R500, for example, a selectable region R504 in which a sub-theme "ThemeA 1" is highlighted is displayed as the sub-theme. Here, the highlighted sub-theme indicates that the sub-theme has been updated, that is, indicates that a new file has been uploaded to a workplace belonging to the sub-theme or there is an unread message, for example. In the selectable region R504, for example, a number corresponding to the number of updated workplaces or the number of unread messages may be displayed.

Here, when the user selects the region R504, the controller 100 displays a workplace including a highlighted workplace "Mike 2/3 Issue J 3" button B500 in the workplace list display region R502. Here, the highlighted workplace also indicates that there has been an update, similarly to the highlighted sub-theme.

Here, when the user further selects the workplace button B500, the controller 100 displays a message in the message display region R506. Furthermore, the controller 100 displays a list of files including an unread marker indication D500 and a read marker indication D502 in the file display region R508. Here, the unread marker indication D500 and the read marker indication D502 are significantly different in display mode, for example, by changing a display color to a different color.

In this way, since the terminal device 20 changes the display mode of the group and displays the group on the display 240, it is possible to notice a newly arrived message in another group, for example.

### 6. Modification

The present disclosure is not limited to the embodiments described above, and various modifications may be made thereto.

That is, the technical scope of the present disclosure also includes such embodiments that can be obtained by combining technical measures that are modified as appropriate within a range not departing from the gist of the present disclosure.

Furthermore, although the above-described embodiments are individually described for convenience of explanation, the embodiments may be executed in combination within a possible range. Moreover, the applicant intends to acquire rights to any of the technologies described in the specification through amendments, divisional applications, or the like.

Furthermore, programs that run on each device in each embodiment control the CPU and the like (programs that cause a computer to function) so as to achieve the functions of the above-mentioned embodiments. Moreover, information handled by these devices is temporarily stored in a temporary storage device (for example, a RAM) when being processed, and then stored in various storage devices, such as a ROM and an HDD, where the information is read, corrected, and written by the CPU as needed.

Here, a recording medium for storing the programs may be any of a semiconductor medium (e.g., a ROM, a non-volatile memory card, etc.), an optical recording medium/magneto-optical recording medium (e.g., a Digital Versatile Disc (DVD), a CD, a BD (registered trademark), etc.), a magnetic recording medium (e.g., a magnetic tape, a flexible disc, etc.), and the like.

For market distribution, the program may be stored and distributed in a portable recording medium or transferred to a server computer connected via a network, such as the Internet. In this case, of course, a storage device in a server device is also included in the present disclosure.

Furthermore, the data described above may not be stored in the device, but may be stored in an external device and called as appropriate. For example, the data may be stored in a Network Attached Storage (NAS) or on the cloud.

Note that the scope of the present disclosure is not limited to the configurations explicitly described in the present specification, and includes any combination of the techniques disclosed in the present specification. In the present disclosure, the configurations to be patented are described in the appended claims. However, it is not intended to exclude configurations from the technical scope on the grounds that the configurations are not described in the claims.

In the present specification, the description including the term "in a/the case of/where" or "when" describes an example, and the configuration is not limited to the described content. A configuration other than the configuration described with the term "in a/the case of/where" or "when" is also disclosed within the scope obvious to those skilled in the art, and it is intended to acquire the right to such a configuration.

Furthermore, the order of processing and the data flow described in the specification is not limited to the order in which they are described. For example, a configuration in which a part of processing is removed, or the order thereof is switched is also disclosed, and it is intended to acquire the right to such a configuration.

The functions described in the embodiments are described as being performed by the corresponding devices, but they may be realized by a single device or even by using an external server.

Moreover, the functional blocks or various features of the devices used in the above-described embodiments may be implemented or executed as an electrical circuit, such an integrated circuit or a plurality of integrated circuits. The electrical circuit that is designed to execute the functions described in the present specification may include a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. The general-purpose processor may be a microprocessor, a general processor, a controller, a microcontroller, or a state machine. The above-described electrical circuit may be configured by a digital circuit or an analog circuit. Moreover, when an integrated circuit technology that replaces the current integrated circuits emerges as a result of advances in semiconductor technology, one or more aspects of the present disclosure may also use the new integrated circuits based on such technology.

### REFERENCE SIGNS LIST

1 System
10 First server device
20 Terminal device
30 Second server device
100, 200, 300 Controller
110, 210, 310 Storage section
112, 212, 312 Storage
114, 214, 314 ROM
116, 216, 316 RAM
240 Display
250 Operation acceptor
170, 270, 370 Communicator

## Claims

1. A display control device (20), comprising:
a communicator (270) that communicates with one or more server devices (10) that share and manage a message and a sharing target; and
a controller (200), wherein
in a case where one or more sharing targets are displayed on a display screen (240) in a list, when a message is linked to one of the sharing targets, the controller (200) performs control to display an identifying indication on the sharing target.

2. The display control device (20) according to claim 1, wherein
the controller (200) is capable of displaying one or more messages in a list, and
when one of the messages is selected, the controller (200) performs control to display the identifying indication on the sharing target linked to the message.

3. The display control device (20) according to claim 1 or 2, wherein
when the identifying indication is selected, the controller (200) performs control to display the message linked to the selected identifying indication.

4. The display control device (20) according to claim 3, wherein
the controller (200) performs control to display content of the sharing target on the display screen (240) together with the message.

5. The display control device (20) according to claim 4, wherein
the controller (200) performs control to display the content of the sharing target when a link indication displayed in the message is selected.

6. The display control device (20) according to claim 1, wherein
when a file is attached to the message, the controller (200) transmits the file as the sharing target, to the server device (10), such that the message and the file link to each other.

7. The display control device (20) according to claim 6, wherein
the server device (10) manages the file in a plurality of versions,
when the identifying indication is selected, the controller (200) performs control to display content of the file corresponding to the selected identifying indication, and
the content of the file is a file of a version obtained when the message and the file are linked to each other.

8. The display control device (20) according to claim 1, wherein
the controller (200) displays, as the identifying indication, an unread indication or a read indication in a switching manner so that a status is identifiable, in accordance with a status of the message and/or the sharing target.

9. The display control device (20) according to claim 2, wherein
the controller (200) performs control to perform display including an icon corresponding to a user who inputs the message, and
the identifying indication is displayed in association with the icon.

10. The display control device (20) according to claim 9, wherein
the controller (200) performs control to display an icon based on the latest message in the identifying indication when a plurality of messages are linked to the sharing target.

11. The display control device (20) according to claim 9, wherein
the controller (200) performs control to:
display the user in a list on the display screen, and
display, when the user is selected, the identifying indication on a sharing target linked to a message corresponding to the selected user and/or the sharing target transmitted by the selected user to the server device (10).

12. The display control device (20) according to claim 9, wherein
the controller (200) displays a cursor on the display screen (240), and
when it is detected that the cursor is superimposed and displayed on the sharing target or the identifying indication, the controller (200) performs control to display, in a pop-up manner on the cursor, information on a user who inputs a message linked to the sharing target.

13. A display system, comprising:
one or more server devices (10) that share and manage a message and a sharing target; and
a display control device (20) that performs, in a case where one or more sharing targets are displayed on a display screen (240) in a list, when a message is linked to one of the sharing targets, control to display an identifying indication on the sharing target.

14. A display method, comprising:
communicating with one or more server devices (10) that share and manage a message and a sharing target; and
performing, in a case where one or more sharing targets are displayed on a display screen (240) in a list, when a message is linked to one of the sharing targets, control to display an identifying indication on the sharing target.

15. A non-transitory computer-readable storage medium storing a program that causes a computer to realize:
a communication function of communicating with one or more server devices (10) that share and manage a message and a sharing target; and
a control function of performing, in a case where one or more sharing targets are displayed on a display screen (240) in a list, when a message is linked to one of the sharing targets, control to display an identifying indication on the sharing target.
